# EUROPÄISCHE PATENTANMELDUNG

(11) **EP 4 191 772 A1**
(43) Veröffentlichungstag der Anmeldung: **07.06.2023**
(21) Anmeldenummer: 22203206.2
(22) Anmeldetag: 24.10.2022
(51) Int. Cl.: H01M 50/247, H01M 50/264

(54) **ENERGIEZELLENHALTEVORRICHTUNG, AKKUPACK MIT DER ENERGIEZELLENHALTEVORRICHTUNG UND SYSTEM MIT DEM AKKUPACK**

(30) Priorität: 02.12.2021 DE 102021213654
(71) Anmelder: Robert Bosch GmbH, 70442 Stuttgart (DE)
(72) Erfinder: Krishnan, Kumaraguru, 14120 Simpang Ampat, Penang (MY); Rejman, Marcin, 71334 Waiblingen (DE); Sim, Jin Kee, 13800 Butterworth (MY)

(57) **Zusammenfassung**

Die Erfindung geht aus von einer Energiezellenhaltevorrichtung (14a) für eine Energiespeichervorrichtung , insbesondere einen Akkupack (12a), mit zumindest einer Zellenhaltereinheit (16a) zu einer Aufnahme zumindest einer Energiezelle (22a), wobei die Zellenhaltereinheit (16a) zumindest ein Zellenhalterelement (24a) aufweist, das zumindest einen Energiezellenaufnahmebereich (26a), insbesondere eine Einzelenergiezellenaufnahme, für die Energiezelle (22a) zumindest teilweise begrenzt und mit zumindest einer Klemmeinheit (20a), die zumindest ein Klemmelement (18a) umfasst, das dazu vorgesehen ist, die in dem Energiezellenaufnahmebereich (26a) anordenbare Energiezelle (22a) in einem in dem Energiezellenaufnahmebereich (26a) angeordneten Zustand der Energiezelle (22a) im Zellenhalterelement (24a) zu verklemmen.

Es wird vorgeschlagen, dass die Klemmeinheit (20a) zumindest ein weiteres Klemmelement (28a) aufweist, das zu einer zusätzlichen Verklemmung der in dem Energiezellenaufnahmebereich (26a) anordenbaren Energiezelle (22a) ausgebildet ist.

## Beschreibung

### Stand der Technik

Es ist bereits eine Energiezellenhaltevorrichtung für eine Energiespeichervorrichtung, mit zumindest einer Zellenhaltereinheit zu einer Aufnahme zumindest einer Energiezelle, wobei die Zellenhaltereinheit zumindest ein Zellenhalterelement aufweist, das zumindest einen Energiezellenaufnahmebereich für die Energiezelle zumindest teilweise begrenzt, und mit zumindest einer Klemmeinheit, die zumindest ein Klemmelement umfasst, das dazu vorgesehen ist, die in dem Energiezellenaufnahmebereich anordenbare Energiezelle in einem in dem Energiezellenaufnahmebereich angeordneten Zustand der Energiezelle im Zellenhalterelement zu verklemmen, vorgeschlagen worden.

### Offenbarung der Erfindung

Die Erfindung geht aus von einer Energiezellenhaltevorrichtung für eine Energiespeichervorrichtung, insbesondere einen Akkupack, mit zumindest einer Zellenhaltereinheit zu einer Aufnahme zumindest einer Energiezelle, wobei die Zellenhaltereinheit zumindest ein Zellenhalterelement aufweist, das zumindest einen Energiezellenaufnahmebereich, insbesondere eine Einzelenergiezellenaufnahme, für die Energiezelle zumindest teilweise begrenzt, und mit zumindest einer Klemmeinheit, die zumindest ein Klemmelement umfasst, das dazu vorgesehen ist, die in dem Energiezellenaufnahmebereich anordenbare Energiezelle in einem in dem Energiezellenaufnahmebereich angeordneten Zustand der Energiezelle im Zellenhalterelement zu verklemmen.

Es wird vorgeschlagen, dass die Klemmeinheit zumindest ein weiteres Klemmelement aufweist, das zu einer zusätzlichen Verklemmung der in dem Energiezellenaufnahmebereich anordenbaren Energiezelle ausgebildet ist. Die Klemmeinheit ist insbesondere verschieden von elektrischen Kontaktelementen des Akkupacks, die zu einer elektrischen Kontaktierung der Energiezelle vorgesehen sind, ausgebildet. Insbesondere ist die Klemmeinheit dazu vorgesehen, die Energiezelle auf zumindest zwei voneinander verschiedene Weisen, vorzugsweise in zumindest zwei aufeinanderfolgenden Schritten, mit dem Zellenhalterelement zu verklemmen. Vorzugsweise ist das zumindest eine Klemmelement dazu vorgesehen, die Energiezelle an, vorzugsweise in, dem Zellenhalterelement mit einer Klemmkraft zumindest teilweise zu verklemmen, insbesondere vorzufixieren. Bevorzugt ist das weitere Klemmelement dazu vorgesehen, eine zusätzliche Klemmkraft auf die, insbesondere bereits mittels des Klemmelements mit dem Zellenhalterelement zumindest teilweise verklemmte, insbesondere vorfixierte, Energiezelle zu einer zusätzlichen Verklemmung der Energiezelle mit dem Zellenhalterelement auszuüben. Vorzugsweise ist eine mittels des Klemmelements erzeugbare Klemmkraft kleiner als eine mittels des weiteren Klemmelements erzeugbare Klemmkraft. Alternativ ist jedoch auch denkbar, dass eine mittels des Klemmelements erzeugbare Klemmkraft größer ist als eine mittels des weiteren Klemmelements erzeugbare Klemmkraft oder dass eine mittels des Klemmelements erzeugbare Klemmkraft gleich groß ist wie eine mittels des weiteren Klemmelements erzeugbare Klemmkraft. Alternativ ist jedoch auch denkbar, dass die Klemmeinheit dazu vorgesehen ist, die Energiezelle mit dem Zellenhalterelement lediglich auf eine Weise zu verklemmen, insbesondere mittels des Klemmelements oder des weiteren Klemmelements vollständig zu verklemmen. Das zumindest eine Klemmelement ist vorzugsweise an dem Zellenhalterelement angeordnet, insbesondere einstückig mit dem Zellenhalterelement ausgebildet. Unter "einstückig" kann zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Ferner ist auch denkbar, dass an dem Zellenhalterelement zumindest zwei Klemmelemente angeordnet sind, insbesondere einstückig mit diesem ausgebildet sind. Besonders bevorzugt ist das Klemmelement durch das Zellenhalterelement gebildet. Alternativ ist jedoch auch denkbar, dass das Klemmelement separat zu dem Zellenhalterelement ausgebildet ist. Insbesondere ist alternativ denkbar, dass das zumindest eine Klemmelement an einer Seitenfläche der Zellenhaltereinheit, insbesondere an einer Seitenfläche eines Zellenhaltergrundkörpers der Zellenhaltereinheit, angeordnet ist. Das Klemmelement ist vorzugsweise als ein elastisches, insbesondere gummielastisches, Element ausgebildet. Das Klemmelement ist insbesondere derart an, vorzugsweise in, dem Energiezellenaufnahmebereich angeordnet, dass das Klemmelement zumindest teilweise, bevorzugt zumindest im Wesentlichen vollständig, innerhalb des Energiezellenaufnahmebereichs angeordnet ist. Vorzugsweise ist das zumindest eine Klemmelement derart an, insbesondere in, dem Energiezellenaufnahmebereich angeordnet, dass die Energiezelle durch eine Verformung des Klemmelements und/oder durch ein Verschieben, insbesondere ein rein lineares Verschieben, des Klemmelements in dem Energiezellenaufnahmebereich anordenbar ist. Alternativ oder zusätzlich, insbesondere bei einer einstückigen Ausgestaltung des Klemmelements mit dem Zellenhalterelement, ist denkbar, dass das zumindest eine Klemmelement derart an, insbesondere in, dem Energiezellenaufnahmebereich angeordnet ist, dass die Energiezelle durch eine Verformung der Zellenhaltereinheit, insbesondere des Zellenhaltergrundkörpers, bevorzugt des Zellenhalterelements, in dem Energiezellenaufnahmebereich anordenbar ist. Das Klemmelement kann beispielsweise stegartig, noppenartig, polygonförmig ausgebildet sein oder eine andere, einem Fachmann als sinnvoll erscheinende Form aufweisen. Vorzugsweise ist durch eine infolge eines Einschiebens der Energiezelle in den Energiezellenaufnahmebereich erzeugbare Verformung des elastisch, insbesondere gummielastisch, ausgebildeten Klemmelements eine Rückstellkraft erzeugbar, die als Klemmkraft auf die Energiezelle wirkt. Insbesondere ist das Klemmelement an einer Innenwand des Energiezellenaufnahmebereichs angeordnet. Bevorzugt bildet das Klemmelement einen Fortsatz der Innenwand des Energiezellenaufnahmebereichs. Alternativ ist beispielsweise auch denkbar, dass die Klemmeinheit zumindest ein Federelement umfasst, welches dazu vorgesehen ist, das zumindest eine Klemmelement vorzuspannen. Vorzugsweise ragt das Klemmelement, insbesondere seitlich, in den Energiezellenaufnahmebereich hinein. Insbesondere ist das zumindest eine Klemmelement mittels des zumindest einen Federelements derart vorgespannt und/oder angeordnet, dass durch ein Einschieben der Energiezelle in den Energiezellenaufnahmebereich das Klemmelement entgegen einer durch das Federelement erzeugbaren Rückstellkraft verschiebbar ist, vorzugsweise um eine Klemmkraft auf die Energiezelle auszuüben. Das Federelement kann beispielsweise als eine Spiralfeder, eine Blattfeder, eine Wellenfeder, eine Drehfeder, eine Druckfeder, eine Kegelfeder, eine Tonnenfeder oder als ein anderes, einem Fachmann als sinnvoll erscheinendes Federelement ausgebildet sein. Bevorzugt ist die Energiezelle mit dem Zellenhalterelement infolge einer durch eine Verformung des Klemmelements bei einer Anordnung der Energiezelle in dem Energiezellenaufnahmebereich erzeugbare Rückstellkraft mit dem Zellenhalterelement verklemmbar.

Das weitere Klemmelement ist vorzugsweise verschieden von dem Klemmelement ausgebildet. Es ist denkbar, dass die Klemmeinheit lediglich das zumindest eine weitere Klemmelement oder mehrere weitere Klemmelemente umfasst. Die mehreren weiteren Klemmelemente können beispielsweise zumindest teilweise identisch zueinander oder zumindest teilweise verschieden voneinander ausgebildet sein. Das zumindest eine weitere Klemmelement ist, insbesondere in zumindest einem Ausführungsbeispiel, vorzugsweise bolzenförmig ausgebildet. Es ist alternativ auch denkbar, dass das zumindest eine weitere Klemmelement stiftförmig, plattenförmig, würfelförmig, kugelförmig, keilförmig oder rampenförmig ausgebildet ist oder eine andere, einem Fachmann als sinnvoll erscheinende Ausgestaltung aufweist. Das zumindest eine weitere Klemmelement weist beispielsweise eine kreiszylindrische, eine konische oder eine andere, einem Fachmann als sinnvoll erscheinende Form auf. Es ist denkbar, dass das weitere Klemmelement einen polygonalen Querschnitt, einen kreisförmigen Querschnitt oder einen anderen, einem Fachmann als sinnvoll erscheinenden Querschnitt aufweist. Der Querschnitt des weiteren Klemmelements verläuft vorzugsweise in einer Ebene senkrecht zu einer Haupterstreckungsachse des weiteren Klemmelements. Unter einer "Haupterstreckungsachse" eines Objekts kann dabei insbesondere eine Achse verstanden werden, welche parallel zu einer längsten Kante eines kleinsten geometrischen Quaders verläuft, welcher das Objekt gerade noch vollständig umschließt. Es ist auch denkbar, dass das zumindest eine weitere Klemmelement als elastisches, insbesondere gummielastisches, Element ausgebildet ist. Insbesondere ist denkbar, dass das zumindest eine, vorzugsweise als elastisches, besonders bevorzugt als gummielastisches Element, ausgebildete, weitere Klemmelement an einer Seitenfläche der Zellenhaltereinheit, insbesondere an einer Seitenfläche des Zellenhaltergrundkörpers der Zellenhaltereinheit, angeordnet ist. Vorzugsweise ist das an der Seitenfläche der Zellenhaltereinheit, insbesondere an der Seitenfläche des Zellenhaltergrundkörpers, anordenbare, bevorzugt aus einem elastischen, insbesondere gummielastischen, Material gebildete, weitere Klemmelement plattenförmig ausgebildet. Es ist alternativ auch denkbar, dass das an der Seitenfläche der Zellenhaltereinheit, insbesondere an der Seitenfläche des Zellenhaltergrundkörpers, anordenbare, bevorzugt aus einem elastischen, insbesondere gummielastischen, Material gebildete weitere Klemmelement würfelförmig, kugelförmig oder dergleichen ausgebildet ist.

Es ist denkbar, dass die Zellenhaltereinheit lediglich ein oder mehrere Zellenhalterelemente umfasst. Beispielsweise bilden die mehreren Zellenhalterelemente eine wabenartige Struktur. Bevorzugt ist das zumindest eine Zellenhalterelement an dem Zellenhaltergrundkörper angeordnet, insbesondere einstückig mit dem Zellenhaltergrundkörper ausgebildet. Besonders bevorzugt ist das zumindest eine Zellenhalterelement von dem Zellenhaltergrundkörper gebildet. Alternativ ist jedoch auch denkbar, dass das zumindest eine Zellenhalterelement lösbar, insbesondere zerstörungsfrei lösbar, an dem Zellenhaltergrundkörper anordenbar ist. Vorzugsweise ist der Zellenhaltergrundkörper einteilig ausgebildet. Es ist jedoch alternativ auch denkbar, dass der Zellenhaltergrundkörper mehrteilig, beispielsweise zweiteilig, ausgebildet ist. Bei der Zellenhaltereinheit mit mehreren Zellenhalterelementen sind die mehreren Zellenhalterelemente bevorzugt einstückig miteinander ausgebildet. Alternativ ist jedoch auch denkbar, dass bei der Zellenhaltereinheit mit mehreren Zellenhalterelemente die mehreren Zellenhalterelemente separat zueinander ausgebildet sind, und vorzugsweise lösbar, insbesondere zerstörungsfrei lösbar, an dem Zellenhaltergrundkörper anordenbar sind. Der durch das zumindest eine Zellenhalterelement zumindest teilweise begrenzte Energiezellenaufnahmebereich ist vorzugsweise als Einzelenergiezellenaufnahme ausgebildet. Das zumindest eine Zellenhalterelement, insbesondere der Energiezellenaufnahmebereich, ist vorzugsweise durch eine Ausnehmung in der Zellenhaltereinheit, insbesondere in dem Zellenhaltergrundkörper, gebildet.

Vorzugsweise ist der Energiezellenaufnahmebereich als ein Aufnahmeschacht für die zumindest eine Energiezelle ausgebildet, in den die Energiezelle einbringbar, insbesondere einschiebbar, ist. Der als Einzelenergiezellenaufnahmebereich ausgebildete Energiezellenaufnahmebereich ist vorzugsweise zu einer Aufnahme einer einzelnen Energiezelle vorgesehen. Alternativ ist jedoch auch denkbar, dass der Energiezellenaufnahmebereich zu einer Aufnahme von zumindest zwei Energiezellen vorgesehen ist.

Das zumindest eine Zellenhalterelement, bevorzugt der Zellenhaltergrundkörper, ist vorzugsweise zumindest im Wesentlichen vollständig aus einem elastischen, insbesondere gummielastischen, Material gebildet. Unter "zumindest im Wesentlichen vollständig" kann zu zumindest 50 %, bevorzugt zu zumindest 75 % und besonders bevorzugt zu zumindest 90 % eines Gesamtvolumens und/oder einer Gesamtmasse eines Objekts, insbesondere des Zellenhalterelements, verstanden werden. Alternativ ist jedoch auch denkbar, dass das Zellenhalterelement, insbesondere der Zellenhaltergrundkörper, zumindest im Wesentlichen vollständig frei von einem elastischen, vorzugsweise gummielastischen, Material ausgebildet ist. Insbesondere ist das zumindest eine weitere Klemmelement dazu vorgesehen, das zumindest eine Zellenhalterelement, vorzugsweise den Zellenhaltergrundkörper, zu einem Verklemmen der Energiezelle im Zellenhalterelement zu verformen, um eine Klemmkraft auf die Energiezelle zu erzeugen. Alternativ oder zusätzlich ist auch denkbar, dass das zumindest eine weitere Klemmelement dazu vorgesehen ist, eine Klemmkraft unmittelbar auf die Energiezelle zu einem Verklemmen der Energiezelle im Zellenhalterelement zu erzeugen. Die Energiezelle ist bevorzugt als Akkuzelle ausgebildet. Alternativ ist jedoch auch denkbar, dass die Energiezelle als Primärzelle oder als eine andere, einem Fachmann als sinnvoll erscheinende Energiezelle ausgebildet ist. Vorzugsweise weist die Energiezelle eine Haupterstreckungsachse auf. Bevorzugt ist die Energiezelle rotationssymmetrisch ausgebildet, insbesondere hinsichtlich Rotationen um die Haupterstreckungsachse der Energiezelle. Insbesondere ist die Energiezelle kreiszylindrisch ausgebildet. Alternativ ist jedoch auch denkbar, dass die Energiezelle flächig oder kugelförmig ausgebildet ist oder eine andere, einem Fachmann als sinnvoll erscheinende Form aufweist. Vorzugsweise ist das Klemmelement dazu vorgesehen, eine Klemmkraft auf die Energiezelle auszuüben, die quer, insbesondere senkrecht, besonders bevorzugt radial, relativ zu der Haupterstreckungsachse der Energiezelle auf die Energiezelle gerichtet ist. Vorzugsweise ist das, bevorzugt in zumindest einem Ausführungsbeispiel bolzenförmig ausgebildete, weitere Klemmelement dazu vorgesehen, eine Klemmkraft auf die Energiezelle auszuüben, die quer, insbesondere senkrecht, besonders bevorzugt radial, relativ zu der Haupterstreckungsachse der Energiezelle auf die Energiezelle gerichtet ist. Alternativ ist jedoch auch denkbar, dass das, vorzugsweise an der Seitenfläche der Zellenhaltereinheit, insbesondere an der Seitenfläche des Zellenhaltergrundkörpers, anordenbare, insbesondere aus einem elastischen, insbesondere gummielastischen, Material gebildete, vorzugsweise plattenförmig ausgebildete, weitere Klemmelement dazu vorgesehen ist, eine Klemmkraft auf die Energiezelle auszuüben, die zumindest im Wesentlichen parallel zu der Haupterstreckungsachse der Energiezelle auf die Energiezelle gerichtet ist. Unter "im Wesentlichen parallel" kann hier eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Durch die erfindungsgemäße Ausgestaltung der Energiezellenhaltevorrichtung kann vorteilhaft eine besonders zuverlässige und flexible Verklemmung von Energiezellen in einem Zellenhalterelement realisiert werden. Vorteilhaft kann eine Energiezellenhaltevorrichtung zur Verfügung gestellt werden, die eine besonders hohe Toleranz gegenüber, beispielsweise fertigungsbedingten, Abmessungsschwankungen von Energiezellen aufweist. Vorteilhaft kann durch den Einsatz von zumindest zwei voneinander verschiedenen Klemmelementen, insbesondere dem Klemmelement und dem weiteren Klemmelement, eine Klemmkraft flexibel eingestellt werden. Vorteilhaft können durch den Einsatz von zumindest zwei voneinander verschiedenen Klemmelementen, insbesondere dem Klemmelement und dem weiteren Klemmelement, Bauteiltoleranzen, vorzugsweise hinsichtlich von zu verklemmenden Energiezellen, besonders einfach und zuverlässig ausgeglichen werden. Vorteilhaft kann eine besonders passgenaue und zuverlässige Fixierung von Energiezellen, deren Abmessungen Schwankungen unterliegen, ermöglicht werden. Vorteilhaft kann einer Beschädigung von Energiezellen, die insbesondere Abmessungsschwankungen unterliegen, entgegengewirkt werden. Vorteilhaft kann ein besonders hoher Montagekomfort bei Energiezellen mit Abmessungsschwankungen realisiert werden.

Ferner wird vorgeschlagen, dass das weitere Klemmelement zu einer zusätzlichen Verklemmung der in dem Energiezellenaufnahmebereich anordenbaren Energiezelle in einem in dem Energiezellenaufnahmebereich angeordneten Zustand der Energiezelle an der Zellenhaltereinheit, insbesondere variabel, anordenbar ist. Das zumindest eine weitere Klemmelement ist insbesondere separat zu der Zellenhaltereinheit, vorzugsweise zumindest separat zu dem zumindest einen Zellenhalterelement und/oder dem Zellenhaltergrundkörper, ausgebildet. Das zumindest eine weitere Klemmelement ist bevorzugt dazu vorgesehen, zu einer zusätzlichen Verklemmung der in dem Energiezellenaufnahmebereich anordenbaren Energiezelle in dem in dem Energiezellenaufnahmebereich angeordneten Zustand der Energiezelle an der Zellenhaltereinheit, vorzugsweise an dem Zellenhaltergrundkörper, angebracht zu werden. Vorzugsweise weist die Klemmeinheit zumindest eine Klemmelementaufnahme auf, an, bevorzugt in, der das zumindest eine weitere Klemmelement zu einer zusätzlichen Verklemmung der in dem Energiezellenaufnahmebereich anordenbaren Energiezelle in dem in dem Energiezellenaufnahmebereich angeordneten Zustand der Energiezelle anbringbar ist. Die zumindest eine Klemmelementaufnahme ist vorzugsweise als eine Ausnehmung, insbesondere als ein Aufnahmeschacht für das zumindest eine weitere Klemmelement, in dem Zellenhaltergrundkörper ausgebildet. Alternativ ist auch denkbar, dass die Klemmelementaufnahme durch eine Seitenfläche der Zellenhaltereinheit, insbesondere durch eine Seitenfläche des Zellenhaltergrundkörpers, gebildet ist. Bevorzugt weist die Zellenhaltereinheit, insbesondere der Zellenhaltergrundkörper, mehrere, vorzugsweise voneinander beabstandete, Klemmelementaufnahmen auf, insbesondere um das zumindest eine weitere Klemmelement variabel an der Zellenhaltereinheit, insbesondere dem Zellenhaltergrundkörper, zu einer zusätzlichen Verklemmung der in dem Energiezellenaufnahmebereich anordenbaren Energiezelle in dem in dem Energiezellenaufnahmebereich angeordneten Zustand der Energiezelle anzuordnen. Besonders bevorzugt sind die mehreren Klemmelementaufnahmen jeweils zu einer Aufnahme von zumindest einem der mehreren weiteren Klemmelemente vorgesehen. Es ist denkbar, dass die mehreren Klemmelementaufnahmen zumindest teilweise identisch zueinander ausgebildet sind und/oder zumindest teilweise verschieden voneinander ausgebildet sind. Alternativ ist jedoch auch denkbar, dass die Zellenhaltereinheit, vorzugsweise der Zellenhaltergrundkörper, lediglich eine Klemmelementaufnahme aufweist, an der das zumindest eine weitere Klemmelement zu einer zusätzlichen Verklemmung der in dem Energiezellenaufnahmebereich anordenbaren Energiezelle in dem in dem Energiezellenaufnahmebereich angeordneten Zustand der Energiezelle, bevorzugt variabel, anordenbar ist. Vorteilhaft kann eine Klemmkraft zur Verklemmung von Energiezellen besonders einfach und komfortabel angepasst werden. Vorteilhaft kann eine Klemmkraft bei Bedarf flexibel mittels des zumindest einen weiteren Klemmelements erhöht werden. Vorteilhaft kann komfortabel und einfach bei einer mittels des zumindest einen Klemmelements bereits ausreichenden Klemmkraft auf das zumindest eine weitere Klemmelement verzichtet werden. Vorteilhaft kann eine besonders komfortable Verklemmung von Energiezellen unterschiedlicher Abmessungen erfolgen.

Außerdem wird vorgeschlagen, dass die Klemmeinheit derart ausgebildet ist, dass eine Klemmkraft auf eine in dem Energiezellenaufnahmebereich anordenbare Energiezelle in einem in dem Energiezellenaufnahmebereich angeordneten Zustand der Energiezelle durch eine Anordnung des weiteren Klemmelements relativ zu dem Energiezellenaufnahmebereich einstellbar ist. Vorzugsweise ist eine Klemmkraft auf die in dem Energiezellenaufnahmebereich anordenbare Energiezelle in einem in dem Energiezellenaufnahmebereich angeordneten Zustand der Energiezelle durch eine variable Anordnung des weiteren Klemmelements an, vorzugsweise in, der Klemmelementaufnahme einstellbar. Insbesondere ist eine Klemmkraft auf die in dem Energiezellenaufnahmebereich anordenbare Energiezelle in einem in dem Energiezellenaufnahmebereich angeordneten Zustand der Energiezelle davon abhängig, an, bevorzugt in, welcher der mehreren Klemmelementaufnahmen das weitere Klemmelement angeordnet ist. Vorzugsweise ist eine Klemmkraft auf die in dem Energiezellenaufnahmebereich anordenbare Energiezelle in einem in dem Energiezellenaufnahmebereich angeordneten Zustand der Energiezelle davon abhängig, welche Anzahl von weiteren Klemmelementen an, bevorzugt in, welchen der mehreren Klemmelementaufnahmen angeordnet sind. Vorteilhaft kann eine Klemmkraft zur Verklemmung einer Energiezelle in einem in dem Energiezellenaufnahmebereich angeordneten Zustand der Energiezelle besonders präzise und flexibel angepasst werden. Vorteilhaft kann eine besonders zuverlässige Verklemmung von Energiezellen, insbesondere auch von Energiezellen die, beispielsweise fertigungsbedingte, Abmessungsschwankungen aufweisen, erreicht werden. Vorteilhaft kann eine Klemmkraft besonders einfach und komfortabel an, beispielsweise einsatzbedingte, unterschiedliche Anforderungen angepasst werden.

Des Weiteren wird vorgeschlagen, dass das weitere Klemmelement zu einem zusätzlichen Verklemmen der in dem Energiezellenaufnahmebereich anordenbaren Energiezelle in einem in dem Energiezellenaufnahmebereich angeordneten Zustand der Energiezelle in die Zellenhaltereinheit einschiebbar ist. Vorzugsweise ist das zumindest eine weitere Klemmelement in die als Ausnehmung in dem Zellenhaltergrundkörper ausgebildete Klemmelementaufnahme zu einem zusätzlichen Verklemmen der in dem Energiezellenaufnahmebereich anordenbaren Energiezelle in einem in dem Energiezellenaufnahmebereich angeordneten Zustand der Energiezelle einschiebbar. Vorzugsweise ist das weitere Klemmelement dazu vorgesehen, durch ein Einschieben des weiteren Klemmelements in die Zellenhaltereinheit, insbesondere in die Klemmelementaufnahme, die Zellenhaltereinheit, insbesondere den Zellenhaltergrundkörper und vorzugsweise das Zellenhalterelement zu verformen. Insbesondere ist das weitere Klemmelement derart in die Zellenhaltereinheit, vorzugsweise in den Zellenhaltergrundkörper, bevorzugt in die Klemmelementaufnahme, einschiebbar, dass durch die dadurch erzeugbare Verformung der Zellenhaltereinheit, insbesondere des Zellenhaltergrundkörpers und besonders bevorzugt des zumindest einen Zellenhalterelements, eine Klemmkraft auf die in dem Energiezellenaufnahmebereich anordenbare Energiezelle in einem in dem Energiezellenaufnahmebereich angeordneten Zustand der Energiezelle erzeugbar ist. Alternativ ist auch denkbar, dass die Klemmelementaufnahme relativ zu dem Energiezellenaufnahmebereich derart angeordnet ist, dass das zumindest eine weitere Klemmelement derart in die Zellenhaltereinheit, vorzugsweise in den Zellenhaltergrundkörper, bevorzugt in die Klemmelementaufnahme einschiebbar ist, dass das zumindest eine weitere Klemmelement direkt an der in dem Energiezellenaufnahmebereich anordenbaren Energiezelle in einem in dem Energiezellenaufnahmebereich angeordneten Zustand der Energiezelle anliegt und vorzugsweise eine Klemmkraft von dem zumindest einen weiteren Klemmelement unmittelbar auf die Energiezelle erzeugbar ist. Vorteilhaft kann die zumindest eine Energiezelle, auch bei Vorhandensein von Abmessungsschwankungen, besonders zuverlässig und einfach verklemmt werden. Vorteilhaft kann das zumindest eine weitere Klemmelement platzsparend angeordnet werden.

Weiterhin wird vorgeschlagen, dass das weitere Klemmelement zu einem zusätzlichen Verklemmen der in dem Energiezellenaufnahmebereich anordenbaren Energiezelle in einem in dem Energiezellenaufnahmebereich angeordneten Zustand der Energiezelle in die Zellenhaltereinheit einschiebbar ist, wobei über eine Einschubtiefe des weiteren Klemmelements relativ zu der Zellenhaltereinheit, insbesondere relativ zu dem Zellenhaltergrundkörper, bevorzugt relativ zu der Klemmelementaufnahme, eine auf die Energiezelle wirkende Klemmkraft einstellbar ist. Vorzugsweise ist eine Verformung des Zellenhaltergrundkörpers, insbesondere des Zellenhalterelements, und damit bevorzugt auch eine Klemmkraft auf die in dem Energiezellenaufnahmebereich anordenbare Energiezelle in einem in dem Energiezellenaufnahmebereich angeordneten Zustand der Energiezelle abhängig von einer Einschubtiefe des zumindest einen weiteren Klemmelements relativ zu der Zellenhaltereinheit, insbesondere relativ zu dem Zellenhaltergrundkörper, bevorzugt relativ zu der Klemmelementaufnahme. Insbesondere ist eine Verformung des Zellenhaltergrundkörpers, vorzugsweise des Zellenhalterelements, und damit bevorzugt auch eine Klemmkraft auf die in dem Energiezellenaufnahmeberiech anordenbare Energiezelle in einem in dem Energiezellenaufnahmebereich angeordneten Zustand der Energiezelle durch ein tieferes Einschieben des weiteren Klemmelements relativ zu der Zellenhaltereinheit, insbesondere der Klemmelementaufnahme, erhöhbar. Vorteilhaft kann besonders einfach und komfortabel eine Klemmkraft zu einem zusätzlichen Verklemmen einer Energiezelle in einem in dem Energiezellenaufnahmebereich angeordneten Zustand der Energiezelle erreicht werden. Vorteilhaft können Energiezellen mit, beispielsweise fertigungsbedingten, Abmessungsschwankungen besonders zuverlässig in dem Zellenhalterelement verklemmt werden. Vorteilhaft kann eine Klemmkraft auf die zumindest eine Energiezelle besonders einfach und komfortabel an, beispielsweise einsatzbedingte, Anforderungen angepasst werden.

Ferner wird vorgeschlagen, dass das weitere Klemmelement zu einem zusätzlichen Verklemmen der in dem Energiezellenaufnahmebereich anordenbaren Energiezelle in einem in dem Energiezellenaufnahmebereich angeordneten Zustand der Energiezelle in die Zellenhaltereinheit einschiebbar ist, wobei das weitere Klemmelement rotationssymmetrisch ausgebildet ist. Bevorzugt ist der Querschnitt des weiteren Klemmelements rotationssymmetrisch, insbesondere in Bezug auf die Haupterstreckungsachse des weiteren Klemmelements. Besonders bevorzugt ist das weitere Klemmelement im engeren Sinne rotationssymmetrisch, insbesondere hinsichtlich Rotationen um die Haupterstreckungsachse des weiteren Klemmelements. Das im engeren Sinne rotationssymmetrisch ausgebildete weitere Klemmelement ist insbesondere derart ausgebildet, dass das weitere Klemmelement eine Rotation um jeden beliebigen Winkel um die Haupterstreckungsachse auf sich selbst abbildet, beispielsweise wenn der Querschnitt des weiteren Klemmelements einen Kreis bildet. Es ist alternativ auch denkbar, dass das weitere Klemmelement, insbesondere der Querschnitt des weiteren Klemmelements, eine n-zählige Rotationssymmetrie aufweist. n kann insbesondere eine natürliche Zahl größer 1 sein. Das n-zählig rotationssymmetrisch ausgebildete weitere Klemmelement bildet insbesondere eine Rotation um einen Winkel α = 360°/n um die Haupterstreckungsachse des weiteren Klemmelements auf sich selbst ab. Beispielsweise bildet der Querschnitt des n-zählig rotationssymmetrisch ausgebildeten weiteren Klemmelements ein Dreieck, ein Quadrat, ein Fünfeck, ein Sechseck oder eine andere, einem Fachmann als sinnvoll erscheinende n-zählig rotationssymmetrische geometrische Figur. Vorteilhaft kann eine besonders einfache und komfortable Montage, insbesondere eine besonders einfache Einführung des weiteren Klemmelements in die Klemmelementaufnahme, zu einer zusätzlichen Verklemmung der in dem Energiezellenaufnahmebereich anordenbaren Energiezelle in einem in dem Energiezellenaufnahmebereich angeordneten Zustand der Energiezelle erfolgen.

Außerdem wird vorgeschlagen, dass das weitere Klemmelement zu einem zusätzlichen Verklemmen der in dem Energiezellenaufnahmebereich anordenbaren Energiezelle in einem in dem Energiezellenaufnahmebereich angeordneten Zustand der Energiezelle in die Zellenhaltereinheit einschiebbar ist, wobei das weitere Klemmelement keilartig ausgebildet ist. Insbesondere ist das zumindest eine weitere Klemmelement, betrachtet parallel zu der Haupterstreckungsachse des weiteren Klemmelements, keilartig ausgebildet. Das weitere Klemmelement ist vorzugsweise spitzzulaufend ausgebildet. Bevorzugt ist das zumindest eine weitere Klemmelement kegelförmig ausgebildet. Besonders bevorzugt weist das zumindest eine weitere Klemmelement die Form eines Kegelstumpfs auf. Alternativ ist auch denkbar, dass das weitere Klemmelement pyramidenförmig ausgebildet ist oder eine andere, einem Fachmann als sinnvoll erscheinende keilartige Ausbildung aufweist. Ferner ist alternativ auch denkbar, dass das zumindest einen weitere Klemmelement frei von einer keilartigen Ausbildung ist, dass insbesondere der Querschnitt betrachtet entlang der Haupterstreckungsachse des zumindest einen weiteren Klemmelements gleichbleibend, vorzugsweise hinsichtlich einer Form und/oder eines Flächeninhalts des zumindest einen weiteren Klemmelements, ist. Vorteilhaft kann konstruktiv einfach eine Klemmkraft auf eine Energiezelle zu einem zusätzlichen Verklemmen der in dem Energiezellenaufnahmebereich anordenbaren Energiezelle in einem in dem Energiezellenaufnahmebereich angeordneten Zustand der Energiezelle durch das zumindest eine weitere Klemmelement angepasst werden.

Des Weiteren wird vorgeschlagen, dass die Klemmeinheit zumindest eine, insbesondere von dem Energiezellenaufnahmebereich für die Energiezelle verschiedene, vorzugsweise die zuvor bereits genannte, Klemmelementaufnahme aufweist, die dazu vorgesehen ist, zumindest das weitere Klemmelement der Klemmeinheit aufzunehmen, um die in dem Energiezellenaufnahmebereich anordenbare Energiezelle in einem in dem Energiezellenaufnahmebereich angeordneten Zustand der Energiezelle im Zellenhalterelement zu verklemmen, wobei die Klemmelementaufnahme sich verjüngend ausgebildet ist. Vorzugsweise ist die zumindest eine, als Ausnehmung in dem Zellenhaltergrundkörper ausgebildete Klemmelementaufnahme ausgehend von einer Oberfläche des Zellenhaltergrundkörpers, insbesondere einer Öffnung der Ausnehmung, sich in Richtung eines tiefsten Punkts der als Ausnehmung ausgebildeten Klemmelementaufnahme verjüngend ausgebildet. Die durch eine Wandung der Zellenhaltereinheit, insbesondere des Zellenhaltergrundkörpers, zumindest teilweise begrenzte Klemmelementaufnahme weist vorzugsweise einen rotationssymmetrischen Querschnitt auf. Der Querschnitt der Klemmelementaufnahme verläuft vorzugsweise in einer Ebene, die parallel zu einer Haupterstreckungsachse der Klemmelementaufnahme verläuft. Es ist denkbar, dass der Querschnitt der Klemmelementaufnahme rotationssymmetrisch im engeren Sinne ist, wobei der Querschnitt der Klemmelementaufnahme insbesondere einen Kreis bildet, oder dass der Querschnitt der Klemmelementaufnahme n-zählig rotationssymmetrisch ist, vorzugsweise zumindest hinsichtlich Rotationen um die Haupterstreckungsachse der Klemmelementaufnahme. Alternativ ist auch denkbar, dass die zumindest eine Klemmelementaufnahme frei von einer sich verjüngenden Form ausgebildet ist. Vorteilhaft kann konstruktiv einfach eine Klemmkraft auf eine Energiezelle zu einem zusätzlichen Verklemmen der in dem Energiezellenaufnahmebereich anordenbaren Energiezelle in einem in dem Energiezellenaufnahmebereich angeordneten Zustand der Energiezelle durch ein Einführen des zumindest einen weiteren Klemmelements in die Klemmelementaufnahme angepasst werden.

Weiterhin wird vorgeschlagen, dass die Klemmeinheit zumindest eine, insbesondere von dem Energiezellenaufnahmebereich für die Energiezelle verschiedene, vorzugsweise die zuvor bereits genannte, Klemmelementaufnahme aufweist, die dazu vorgesehen ist, zumindest das weitere Klemmelement der Klemmeinheit aufzunehmen, um die in dem Energiezellenaufnahmebereich anordenbare Energiezelle in einem in dem Energiezellenaufnahmebereich angeordneten Zustand der Energiezelle im Zellenhalterelement zu verklemmen, wobei die Klemmelementaufnahme beabstandet zu dem Energiezellenaufnahmebereich angeordnet ist oder, insbesondere direkt, an dem Energiezellenaufnahmebereich anliegt. Bei einer zu dem Energiezellenaufnahmebereich beabstandeten Ausbildung der Klemmelementaufnahme ist das zumindest eine weitere Klemmelement insbesondere dazu vorgesehen, durch eine Anordnung in der Klemmelementaufnahme die Zellenhaltereinheit, insbesondere den Zellenhaltergrundkörper und besonders bevorzugt das Zellenhalterelement, derart zu verformen, dass eine Klemmkraft auf die in dem Energiezellenaufnahmebereich anordenbare Energiezelle in einem in dem Energiezellenaufnahmebereich angeordneten Zustand der Energiezelle erzeugbar ist. Bei einer an dem Energiezellenaufnahmebereich, vorzugsweise direkt, anliegenden Ausbildung der Klemmelementaufnahme ist das zumindest eine weitere Klemmelement dazu vorgesehen, durch eine Anordnung in der Klemmelementaufnahme eine Klemmkraft unmittelbar auf die in dem Energiezellenaufnahmebereich anordenbare Energiezelle in einem in dem Energiezellenaufnahmebereich angeordneten Zustand der Energiezelle zu erzeugen. Vorteilhaft kann, insbesondere je nach Bedarf, eine besonders kompakte zusätzliche Verklemmung der Energiezelle mittels des zumindest einen weiteren Klemmelements oder eine besonders energiezellenschonende zusätzliche Verklemmung der Energiezelle mittels des zumindest einen weiteren Klemmelements realisiert werden.

Ferner wird vorgeschlagen, dass die Energiezellenhaltevorrichtung ein Gehäuse umfasst, in dem zumindest die Zellenhaltereinheit anordenbar ist, wobei das Klemmelement in dem Energiezellenaufnahmebereich angeordnet ist und das weitere Klemmelement an einer, insbesondere der zuvor bereits genannten, Seitenfläche der Zellenhaltereinheit, insbesondere des Zellenhaltergrundkörpers, anordenbar ist und dazu vorgesehen ist, durch ein Verschließen des Gehäuses der Energiezellenhaltevorrichtung die in dem Energiezellenaufnahmebereich anordenbare Energiezelle in einem in dem Energiezellenaufnahmebereich angeordneten Zustand der Energiezelle mit dem Zellenhalterelement zu verklemmen. Insbesondere ist das weitere Klemmelement dazu vorgesehen, eine durch das Verschließen des Gehäuses der Energiezellenhaltevorrichtung auf das weitere Klemmelement erzeugbare Kraft auf die Zellenhaltereinheit zu übertragen, vorzugsweise zu einer Verformung der Zellenhaltereinheit, bevorzugt des Zellenhaltergrundkörpers und besonders bevorzugt des Zellenhalterelements, um eine Klemmkraft auf die in dem Energiezellenaufnahmebereich anordenbare Energiezelle in einem in dem Energiezellenaufnahmebereich angeordneten Zustand der Energiezelle zu erzeugen. Alternativ ist beispielsweise, insbesondere in einem Ausführungsbeispiel, bei dem das weitere Klemmelement an der Seitenfläche der Zellenhaltereinheit angeordnet ist, denkbar, dass die Klemmeinheit frei von, vorzugsweise durch Ausnehmungen in der Zellenhaltereinheit, insbesondere in dem Zellenhaltergrundkörper, gebildeten, Klemmelementaufnahmen, insbesondere zur Aufnahme von bolzenförmig oder dergleichen ausgebildeten, weiteren Klemmelementen, ausgebildet ist. Ferner ist beispielsweise auch denkbar, dass die Klemmeinheit zumindest das eine, insbesondere an, vorzugsweise in, dem Energiezellenaufnahmebereich angeordnete, Klemmelement, zumindest das eine, insbesondere in der zumindest einen Klemmelementaufnahme anordenbare, bolzenförmig oder dergleichen ausgebildete weitere Klemmelement und zumindest ein, an der Seitenfläche der Zellenhaltereinheit, insbesondere des Zellenhaltergrundkörpers, anordenbares, bevorzugt plattenförmig oder dergleichen ausgebildetes, zusätzliches Klemmelement aufweist, das dazu vorgesehen ist, durch ein Verschließen des Gehäuses der Energiezellenhaltevorrichtung die in dem Energiezellenaufnahmebereich anordenbare Energiezelle in einem in dem Energiezellenaufnahmebereich angeordneten Zustand der Energiezelle mit dem Zellenhalterelement zusätzlich zu verklemmen. Vorteilhaft kann eine besonders zuverlässige Verklemmung von Energiezellen, insbesondere auch von Energiezellen, die, beispielswese fertigungsbedingte, Abmessungsschwankungen aufweisen, erreicht werden.

Des Weiteren wird vorgeschlagen, dass die Zellenhaltereinheit derart ausgebildet ist, dass der Energiezellenaufnahmebereich über eine Wärmezufuhr vergrößerbar ist. Vorzugsweise ist die Zellenhaltereinheit, insbesondere der Zellenhaltergrundkörper, bevorzugt das Zellenhalterelement, derart ausgebildet, dass der Energiezellenaufnahmebereich über eine Wärmezufuhr vergrößerbar ist, um die zumindest eine Energiezelle in den Energiezellenaufnahmebereich einzubringen. Bevorzugt ist das zumindest eine Klemmelement über eine Wärmezufuhr vergrößerbar ausbildet, um die zumindest eine Energiezelle in den Energiezellenaufnahmebereich einzubringen. Vorzugsweise ist die Zellenhaltereinheit, insbesondere der Zellenhaltergrundkörper, bevorzugt das Zellenhalterelement, dazu vorgesehen, durch die Wärmezufuhr erweicht und ausgedehnt zu werden, um ein Einbringen der zumindest einen Energiezelle in den Energiezellenaufnahmebereich zu ermöglichen. Bevorzugt ist die Zellenhaltereinheit, insbesondere der Zellenhaltergrundkörper, bevorzugt das Zellenhalterelement, dazu vorgesehen, sich nach einem infolge der Wärmezufuhr der Zellenhaltereinheit, insbesondere des Zellenhaltergrundkörpers, bevorzugt des Zellenhalterelements, ermöglichten Einbringen der Energiezelle in den Energiezellenaufnahmebereich abzukühlen und sich dadurch zusammenzuziehen, wodurch vorzugsweise mittels der Klemmeinheit, insbesondere des Klemmelements, eine Klemmkraft auf die Energiezelle in einem in dem Energiezellenaufnahmebereich angeordneten Zustand der Energiezelle erzeugbar ist. Die Wärmezufuhr, bevorzugt zur Vergrößerung der Zellenhaltereinheit, insbesondere des Zellenhaltergrundkörpers, bevorzugt des Zellehalterelements, ist beispielsweise mittels eines Heißluftföns, eines Ofens oder dergleichen erzeugbar. Vorteilhaft kann eine besonders flexible und zuverlässige Verklemmung von Energiezellen mit unterschiedlichen Abmessungen erfolgen. Vorteilhaft kann eine besonders passgenaue Halterung der Energiezellen erreicht werden.

Weiterhin wird ein, insbesondere der zuvor bereits genannte, Akkupack mit zumindest einer Energiezelle, mit einem Akkupackgehäuse, wobei das Akkupackgehäuse eine mechanische und/oder elektrische Schnittstelle zur lösbaren Verbindung mit einer Verbrauchereinheit aufweist, und mit zumindest einer erfindungsgemäßen Energiezellenhaltevorrichtung vorgeschlagen. Die Verbrauchereinheit kann beispielsweise als eine Handwerkzeugmaschine, als ein E-Bike, als eine Lampe, insbesondere eine Baustellenleuchte, als ein Radio, insbesondere ein Baustellenradio, oder als ein anderer, einem Fachmann als sinnvoll erscheinender Verbraucher ausgebildet sein. Das Akkupackgehäuse entspricht vorzugsweise dem Gehäuse der Energiezellenhaltevorrichtung. Vorteilhaft kann ein Akkupack mit einer besonders zuverlässigen und flexiblen Energiezellenverklemmung bereitgestellt werden.

Außerdem wird vorgeschlagen, dass die Energiezelle in dem Energiezellenaufnahmebereich in einem Querschnitt betrachtet über drei Klemmpunkte verklemmt ist, wobei zumindest ein Klemmpunkt der drei Klemmpunkte verschieden von dem zumindest einen Klemmelement ausgebildet ist. Der zumindest eine Energiezellenaufnahmebereich weist vorzugsweise eine Haupterstreckungsachse auf. Die Haupterstreckungsachse des Energiezellenaufnahmebereichs verläuft vorzugsweise zumindest im Wesentlichen parallel zu der Haupterstreckungsachse der zumindest einen Energiezelle in einem in dem Energiezellenaufnahmebereich angeordneten Zustand der zumindest einen Energiezelle. Der Querschnitt verläuft bevorzugt in einer Ebene, die senkrecht zu der Haupterstreckungsachse des Energiezellenaufnahmebereichs verläuft. Insbesondere in zumindest einem Ausführungsbeispiel weist die Klemmeinheit die zumindest zwei Klemmelemente auf, wobei jeweils eines der zwei Klemmelemente einen Klemmpunkt der drei Klemmpunkte bildet. Der Klemmpunkt der drei Klemmpunkte, der verschieden ist von dem Klemmelement, insbesondere den zumindest zwei Klemmelementen, ist vorzugsweise von einer den Energiezellenaufnahmebereich zumindest teilweise begrenzenden Fläche des Zellenhalterelements gebildet, die verschieden ist von dem zumindest einen Klemmelement, insbesondere den zumindest zwei Klemmelementen. Die Energiezelle liegt vorzugsweise in einem in dem Energiezellenaufnahmebereich angeordneten Zustand zumindest an den drei Klemmpunkten an, bevorzugt lediglich an den drei Klemmpunkten an. Die drei Klemmpunkte sind besonders bevorzugt derart relativ zueinander angeordnet, dass die drei Klemmpunkte Eckpunkte eines gedachten gleichschenkligen Dreiecks bilden. Vorteilhaft kann eine Reibung bei einem Einschieben der Energiezellen in den Energiezellenaufnahmebereich gering gehalten werden. Vorteilhaft kann eine Energiezelle besonders einfach und zuverlässig in dem Energiezellenaufnahmebereich fixiert werden. Vorteilhaft kann ein besonders hoher Montagekomfort zu einer besonders sicheren Fixierung der Energiezelle erreicht werden. Durch die drei Klemmpunkte kann eine besonders vorteilhafte Kraftverteilung, insbesondere bei äußerer Krafteinwirkung durch Stöße oder dergleichen, erreicht werden. Vorteilhaft kann einer unerwünschten Deformierung der Zellenhaltereinheit und/oder der Energiezellen besonders einfach und effektiv entgegengewirkt werden. Vorteilhaft kann einer Beschädigung der Energiezellen und/oder der Zellenhaltereinheit entgegengewirkt werden.

Des Weiteren wird vorgeschlagen, dass das weitere Klemmelement, durch das Akkupackgehäuse, insbesondere durch ein außenliegendes Gehäuseteil, vorzugsweise durch einen Akkupackgehäuseboden des Akkupackgehäuses, gebildet ist. Alternativ ist auch denkbar, dass das weitere Klemmelement von einem Akkupackgehäusedeckel des Akkupackgehäuses oder von einem anderem, einem Fachmann als sinnvoll erscheinenden Gehäuseteil des Akkupackgehäuses gebildet ist. Vorzugsweise ist das durch das Akkupackgehäuse, insbesondere das außenliegende Gehäuseteil, bevorzugt der Akkupackgehäuseboden, ausgebildete weitere Klemmelement dazu vorgesehen, durch ein Verschließen des Akkupackgehäuses die in dem in dem Energiezellenaufnahmebereich anordenbare Energiezelle in einem in dem Energiezellenaufnahmebereich angeordneten Zustand der Energiezelle mit dem Zellenhalterelement zu verklemmen. Insbesondere ist das durch das Akkupackgehäuse, vorzugsweise das außenliegende Gehäuseteil, bevorzugt der Akkupackgehäuseboden, ausgebildete weitere Klemmelement dazu vorgesehen, eine durch das Verschließen des Akkupackgehäuses erzeugbare Kraft auf die Zellenhaltereinheit zu übertragen, vorzugsweise zu einer Verformung der Zellenhaltereinheit, bevorzugt des Zellenhaltergrundkörpers und besonders bevorzugt des Zellenhalterelements, um eine Klemmkraft auf die in dem Energiezellenaufnahmebereich anordenbare Energiezelle in einem in dem Energiezellenaufnahmebereich angeordneten Zustand der Energiezelle zu erzeugen. Vorteilhaft kann eine zuverlässige und flexible Verklemmung besonders einfach und kostengünstig realisiert werden. Vorteilhaft können bereits vorhandene Bauteile des Akkupacks zur zusätzlichen Verklemmung der Energiezellen genutzt werden. Vorteilhaft kann ein Akkupack mit flexibler und zuverlässiger Verklemmung mit einer besonders geringen Anzahl von Bauteilen realisiert werden.

Ferner geht die Erfindung aus von einem System, umfassend einen Akkupack mit einer erfindungsgemäßen Energiezellenhaltevorrichtung und einem weiteren Akkupack mit einer Energiezellenhaltevorrichtung für eine Energiespeichervorrichtung, insbesondere den weiteren Akkupack, die zumindest eine Zellenhaltereinheit zu einer Aufnahme zumindest einer Energiezelle umfasst, wobei die Zellenhaltereinheit zumindest ein Zellenhalterelement aufweist, das zumindest einen Energiezellenaufnahmebereich, insbesondere eine Einzelenergiezellenaufnahme, für die Energiezelle zumindest teilweise begrenzt, und wobei die Energiezellenhaltevorrichtung des weiteren Akkupacks zumindest eine Klemmeinheit umfasst, die zumindest ein Klemmelement umfasst, das dazu vorgesehen ist, die in dem Energiezellenaufnahmebereich anordenbare Energiezelle in einem in dem Energiezellenaufnahmebereich angeordneten Zustand im Zellenhalterelement zu verklemmen. Es wird vorgeschlagen, dass die Zellenhaltereinheit der Energiezellenhaltevorrichtung des Akkupacks und die Zellenhaltereinheit der Energiezellenhaltevorrichtung des weiteren Akkupacks sowie das Klemmelement der Klemmeinheit des Akkupacks und das Klemmelement der Klemmeinheit des weiteren Akkupacks zumindest im Wesentlichen identisch ausgebildet sind. Darunter, dass zwei Objekte "zumindest im Wesentlichen identisch ausgebildet sind", kann insbesondere verstanden werden, dass die zwei Objekte bis auf fertigungsbedingte Abmessungsschwankungen identisch ausgebildet sind. Insbesondere unterscheiden sich die Energiezellenhaltevorrichtung des Akkupacks und die Energiezellenhaltevorrichtung des weiteren Akkupacks zumindest in einem Element. Alternativ ist jedoch auch denkbar, dass die Energiezellenhaltevorrichtung des Akkupacks und die Energiezellenhaltevorrichtung des weiteren Akkupacks vollständig identisch ausgebildet sind. Vorzugsweise ist die Klemmeinheit der Energiezellenhaltevorrichtung des weiteren Akkupacks frei von, insbesondere bolzenförmig oder dergleichen ausgebildeten, weiteren Klemmelementen. Bevorzugt weisen die Klemmeinheit der Energiezellenhaltevorrichtung des Akkupacks und die Klemmeinheit der Energiezellenhaltevorrichtung des weiteren Akkupacks jeweils zumindest eine, insbesondere die zuvor bereits genannte, Klemmelementaufnahme auf, die dazu vorgesehen ist, zumindest ein Klemmelement, insbesondere zumindest das, vorzugsweise bolzenförmig oder dergleichen ausgebildete, weitere Klemmelement, aufzunehmen. Vorzugsweise sind der Akkupack und der weitere Akkupack dazu vorgesehen, eine gleiche Anzahl von Energiezellen aufzunehmen. Es ist denkbar, dass sich die Energiezellen des Akkupacks und des weiteren Akkupacks hinsichtlich einer Kapazität unterscheiden. Es ist auch denkbar, dass die Energiezellen des Akkupacks und des weiteren Akkupacks eine identische Kapazität aufweisen, wobei die Energiezellen des Akkupacks und des weiteren Akkupacks, beispielsweise fertigungsbedingte, Abmessungsunterschiede relativ zueinander aufweisen. Vorteilhaft kann eine Energiezellenhaltevorrichtung zur Verfügung gestellt werden, die in Akkupacks mit unterschiedlichen Energiezellen zu einer zuverlässigen und flexiblen Verklemmung der Energiezellen genutzt werden kann. Vorteilhaft kann durch die erfindungsgemäße Ausgestaltung der Klemmeinheit eine Zellenhaltereinheit für verschiedene Energiezellen genutzt werden. Vorteilhaft können Produktionskosten gesenkt werden.

Die erfindungsgemäße Energiezellenhaltevorrichtung, der erfindungsgemäße Akkupack und/oder das erfindungsgemäße System sollen/soll hierbei nicht auf die oben beschriebene Anwendung und Ausführungsform beschränkt sein. Insbesondere können/kann die erfindungsgemäße Energiezellenhaltevorrichtung, der erfindungsgemäße Akkupack und/oder das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einem erfindungsgemäßen Akkupack und einem weiteren Akkupack in einer schematischen Schnittdarstellung,
- Fig. 2: eine Schnittdarstellung durch einen Teil des erfindungsgemäßen Akkupacks mit einer erfindungsgemäßen Energiezellenhaltevorrichtung,
- Fig. 3: einen erfindungsgemäßen Akkupack mit einer erfindungsgemäßen Energiezellenhaltevorrichtung in einer ersten alternativen Ausführung in einer schematischen Schnittdarstellung,
- Fig. 4: einen erfindungsgemäßen Akkupack mit einer erfindungsgemäßen Energiezellenhaltevorrichtung in einer zweiten alternativen Ausführung in einer schematischen Schnittdarstellung,
- Fig. 5: einen erfindungsgemäßen Akkupack mit einer erfindungsgemäßen Energiezellenhaltevorrichtung in einer dritten alternativen Ausführung in einer schematischen Schnittdarstellung,
- Fig. 6: die erfindungsgemäße Energiezellenhaltevorrichtung in der dritten alternativen Ausführung in einer schematischen Schnittdarstellung und
- Fig. 7: die erfindungsgemäße Energiezellenhaltevorrichtung in der dritten alternativen Ausführung in einer weiteren schematischen Darstellung.

### Beschreibung der Ausführungsbeispiele

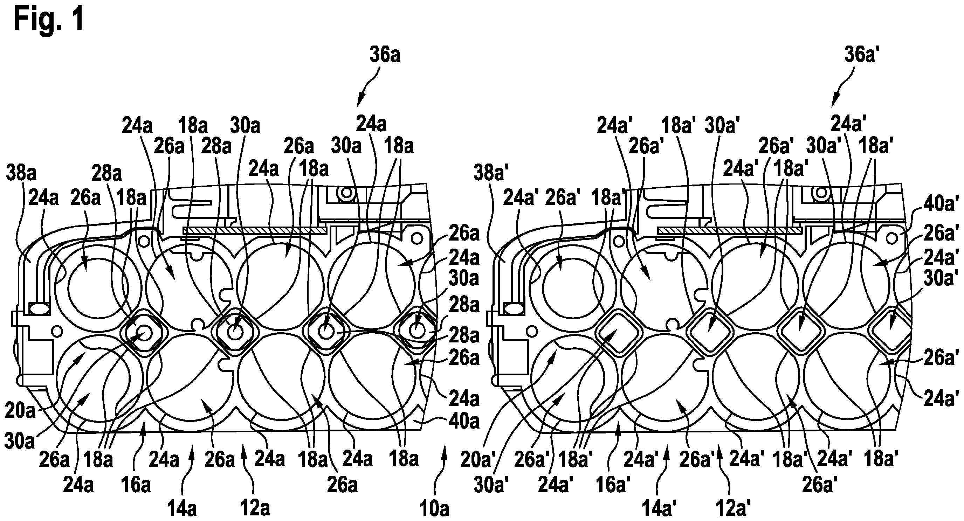

Figur 1 zeigt ein System 10a, umfassend einen Akkupack 12a mit einer Energiezellenhaltevorrichtung 14a für eine Energiespeichervorrichtung, insbesondere für den Akkupack 12a, und einen weiteren Akkupack 12a' mit einer Energiezellenhaltevorrichtung 14a'. Der Akkupack 12a umfasst zumindest ein Akkupackgehäuse 38a. Das Akkupackgehäuse 38a weist eine mechanische und/oder elektrische Schnittstelle 36a zur lösbaren Verbindung mit einer Verbrauchereinheit auf. Die Verbrauchereinheit kann beispielsweise als eine Handwerkzeugmaschine, als ein E-Bike, als eine Lampe, insbesondere eine Baustellenleuchte, als ein Radio, insbesondere ein Baustellenradio, oder als ein anderer, einem Fachmann als sinnvoll erscheinender Verbraucher ausgebildet sein. Der Akkupack 12a und der weitere Akkupack 12a' weisen jeweils mehrere Energiezellen 22a auf. Die mehreren Energiezellen 22a des Akkupacks 12a und des weiteren Akkupacks 12a' sind zweilagig angeordnet. Die Energiezellen 22a sind als Akkuzellen ausgebildet. Alternativ ist jedoch auch denkbar, dass die Energiezellen 22a als Primärzellen oder als andere, einem Fachmann als sinnvoll erscheinende Energiezellen 22a ausgebildet sind. Die Energiezellen 22a weisen jeweils eine Haupterstreckungsachse auf. Die Energiezellen 22a sind jeweils rotationssymmetrisch ausgebildet, insbesondere hinsichtlich Rotationen um die Haupterstreckungsachse der jeweiligen Energiezelle 22a. Die Energiezellen 22a sind kreiszylindrisch ausgebildet. Alternativ ist jedoch auch denkbar, dass die Energiezellen 22a flächig oder kugelförmig ausgebildet sind oder eine andere, einem Fachmann als sinnvoll erscheinende Form aufweisen.

Die Energiezellenhaltevorrichtung 14a umfasst zumindest eine Zellenhaltereinheit 16a zu einer Aufnahme der mehreren Energiezellen 22a des Akkupacks 12a. Es ist alternativ auch denkbar, dass die Zellenhaltereinheit 16a zu einer Aufnahme lediglich einer Energiezelle 22a vorgesehen ist. Die Zellenhaltereinheit 16a weist zumindest mehrere Zellenhalterelemente 24a auf, die jeweils zumindest einen Energiezellenaufnahmebereich 26a, insbesondere eine Einzelenergiezellenaufnahme, für jeweils eine Energiezelle 22a der mehreren Energiezellen 22a zumindest teilweise begrenzen. Die mehreren Zellenhalterelemente 24a bilden eine wabenartige Struktur. Alternativ ist auch denkbar, dass die Zellenhaltereinheit 16a lediglich ein Zellenhalterelement 24a aufweist.

Die mehreren Zellenhalterelemente 24a sind an einem Zellenhaltergrundkörper 40a der Zellenhaltereinheit 16a angeordnet, insbesondere einstückig mit dem Zellenhaltergrundkörper 40a ausgebildet. Besonders bevorzugt sind die mehreren Zellenhalterelemente 24a von dem Zellenhaltergrundkörper 40a gebildet. Alternativ ist jedoch auch denkbar, dass die mehreren Zellenhalterelemente 24a lösbar, insbesondere zerstörungsfrei lösbar, an dem Zellenhaltergrundkörper 40a anordenbar sind. Der Zellenhaltergrundkörper 40a ist einteilig ausgebildet. Es ist jedoch alternativ auch denkbar, dass der Zellenhaltergrundkörper 40a mehrteilig, beispielsweise zweiteilig, ausgebildet ist. Die durch jeweils eines der mehreren Zellenhalterelemente 24a zumindest teilweise begrenzten Energiezellenaufnahmebereiche 26a sind jeweils als Einzelenergiezellenaufnahme ausgebildet. Das zumindest eine Zellenhalterelement 24a, insbesondere der Energiezellenaufnahmebereich 26a, ist durch eine Ausnehmung in der Zellenhaltereinheit 16a, insbesondere in dem Zellenhaltergrundkörper 40a, gebildet. Der Energiezellenaufnahmebereich 26a ist als ein Aufnahmeschacht für zumindest eine der Energiezellen 22a ausgebildet, in den die zumindest eine Energiezelle 22a einbringbar, insbesondere einschiebbar, ist. Die als Einzelenergiezellenaufnahmen ausgebildeten Energiezellenaufnahmebereiche 26a sind jeweils zu einer Aufnahme einer einzelnen Energiezelle 22a der mehreren Energiezellen 22a vorgesehen. Alternativ ist jedoch auch denkbar, dass die Energiezellenaufnahmebereiche 26a jeweils zu einer Aufnahme von zumindest zwei Energiezellen 22a der mehreren Energiezellen 22a vorgesehen sind. Die mehreren Zellenhalterelemente 24a, bevorzugt der Zellenhaltergrundkörper 40a, sind/ist zumindest im Wesentlichen vollständig aus einem elastischen, insbesondere gummielastischen, Material gebildet. Alternativ ist jedoch auch denkbar, dass die mehreren Zellenhalterelemente 24a, insbesondere der Zellenhaltergrundkörper 40a zumindest im Wesentlichen vollständig frei von einem elastischen, insbesondere gummielastischen, Material ausgebildet sind/ist.

Die Energiezellenhaltevorrichtung 14a umfasst zumindest eine Klemmeinheit 20a. Die Klemmeinheit 20a ist verschieden von elektrischen Kontaktelementen des Akkupacks 12a, die zu einer elektrischen Kontaktierung der Energiezellen 22a vorgesehen sind, ausgebildet. Die Klemmeinheit 20a ist dazu vorgesehen, die mehreren Energiezellen 22a jeweils auf zumindest zwei voneinander verschiedene Weisen, insbesondere in zumindest zwei aufeinanderfolgenden Schritten, mit einem der mehreren Zellenhalterelemente 24a zu verklemmen. Die Klemmeinheit 20a umfasst mehrere Klemmelemente 18a. Im Folgenden werden die mehreren Klemmelemente 18a beispielhaft anhand eines einzelnen Klemmelements 18a der mehreren Klemmelemente 18a beschrieben. Das zumindest eine Klemmelement 18a ist dazu vorgesehen, eine in dem Energiezellenaufnahmebereich 26a von einem Zellenhalterelement 24a der mehreren Zellenhalterelemente 24a anordenbare Energiezelle 22a der mehreren Energiezellen 22a in einem in dem Energiezellenaufnahmebereich 26a angeordneten Zustand der Energiezelle 22a im Zellenhalterelement 24a zu verklemmen. Das zumindest eine Klemmelement 18a ist dazu vorgesehen, die Energiezelle 22a an, vorzugsweise in, dem Zellenhalterelement 24a mit einer Klemmkraft zumindest teilweise zu verklemmen, insbesondere vorzufixieren.

Die Klemmeinheit 20a weist mehrere weitere Klemmelemente 28a auf, die zu einer zusätzlichen Verklemmung der in den jeweiligen Energiezellenaufnahmebereich 26a anordenbaren mehreren Energiezellen 22a ausgebildet sind. Im Folgenden werden die mehreren weiteren Klemmelemente 28a beispielhaft anhand eines einzelnen weiteren Klemmelements 28a der mehreren weiteren Klemmelemente 28a beschrieben. Das weitere Klemmelement 28a ist dazu vorgesehen, eine zusätzliche Klemmkraft auf die, insbesondere bereits mittels des Klemmelements 18a mit dem Zellenhalterelement 24a zumindest teilweise verklemmte, insbesondere vorfixierte, Energiezelle 22a zu einer zusätzlichen Verklemmung der Energiezelle 22a mit dem Zellenhalterelement 24a auszuüben. Eine mittels des Klemmelements 18a erzeugbare Klemmkraft ist kleiner als eine mittels des weiteren Klemmelements 28a erzeugbare Klemmkraft. Alternativ ist jedoch auch denkbar, dass eine mittels des Klemmelements 18a erzeugbare Klemmkraft größer ist als eine mittels des weiteren Klemmelements 28a erzeugbare Klemmkraft oder dass eine mittels des Klemmelements 18a erzeugbare Klemmkraft gleich groß ist wie eine mittels des weiteren Klemmelements 28a erzeugbare Klemmkraft. Alternativ ist jedoch auch denkbar, dass die Klemmeinheit 20a dazu vorgesehen ist, die Energiezelle 22a mit dem Zellenhalterelement 24a lediglich auf eine Weise zu verklemmen, insbesondere mittels des Klemmelements 18a oder des weiteren Klemmelements 28a vollständig zu verklemmen. Das zumindest eine Klemmelement 18a ist an dem Zellenhalterelement 24a angeordnet. Das Klemmelement 18a ist durch das Zellenhalterelement 24a gebildet. Alternativ ist jedoch auch denkbar, dass das Klemmelement 18a separat zu dem Zellenhalterelement 24a ausgebildet ist. Das Klemmelement 18a ist als ein elastisches, insbesondere gummielastisches, Element ausgebildet. Es ist denkbar, dass an dem Zellenhalterelement 24a zumindest zwei Klemmelemente 18a angeordnet sind, insbesondere einstückig mit diesem ausgebildet sind. Das Klemmelement 18a ist derart an, insbesondere in, dem Energiezellenaufnahmebereich 26a angeordnet, dass das Klemmelement 18a zumindest teilweise, bevorzugt zumindest im Wesentlichen vollständig, innerhalb des Energiezellenaufnahmebereichs 26a angeordnet ist. Das zumindest eine Klemmelement 18a ist derart an, insbesondere in, dem Energiezellenaufnahmebereich 26a angeordnet, dass die Energiezelle 22a nur durch eine Verformung des Klemmelements 18a und/oder der Zellenhaltereinheit 16a, insbesondere eines Zellenhaltergrundkörpers 40a der Zellenhaltereinheit 16a, bevorzugt des Zellenhalterelements 24a, in dem Energiezellenaufnahmebereich 26a anordenbar ist. Das Klemmelement 18a ist stegartig ausgebildet. Alternativ ist jedoch auch denkbar, dass das Klemmelement 18a noppenartig oder polygonförmig ausgebildet ist oder eine andere, einem Fachmann als sinnvoll erscheinende Form aufweist. Die Energiezelle 22a ist mit dem Zellenhalterelement 24a infolge einer durch eine Verformung des Klemmelements 18a und/oder der Zellenhaltereinheit 16a, insbesondere des Zellenhaltergrundkörpers 40a, bevorzugt des Zellenhalterelements 24a, bei einer Anordnung der Energiezelle 22a in dem Energiezellenaufnahmebereich 26a erzeugbaren Rückstellkraft mit dem Zellenhalterelement 24a verklemmbar. Durch eine infolge eines Einschiebens der Energiezelle 22a in den Energiezellenaufnahmebereich 16a erzeugbare Verformung des elastisch, insbesondere gummielastisch, ausgebildeten Klemmelements 18a ist eine Rückstellkraft erzeugbar, die als Klemmkraft auf die Energiezelle 22a wirkt. Es ist denkbar, dass das zumindest eine Klemmelement 18a derart an, insbesondere in, dem Energiezellenaufnahmebereich 26a angeordnet ist, dass die Energiezelle 22a durch eine Verformung des Klemmelements 18a und/oder durch ein Verschieben, insbesondere rein lineares Verschieben, des Klemmelements 18a in dem Energiezellenaufnahmebereich 26a anordenbar ist. Alternativ oder zusätzlich ist denkbar, dass das zumindest eine Klemmelement 18a derart an, insbesondere in, dem Energiezellenaufnahmebereich 26a angeordnet ist, dass die Energiezelle 22a durch eine Verformung der Zellenhaltereinheit 16a, insbesondere eines Zellenhaltergrundkörpers 40a der Zellenhaltereinheit 16a, bevorzugt des Zellenhalterelements 24a, in dem Energiezellenaufnahmebereich 26a anordenbar ist. Beispielsweise ist alternativ denkbar, dass die Klemmeinheit 20a zumindest ein Federelement umfasst, welches dazu vorgesehen ist, das zumindest eine Klemmelement 18a vorzuspannen. Insbesondere ist das zumindest eine Klemmelement derart mittels des zumindest einen Federelements vorgespannt und/oder angeordnet, dass durch ein Einschieben der Energiezelle 22a in den Energiezellenaufnahmebereich 26a das Klemmelement 18a entgegen einer durch das Federelement erzeugbaren Rückstellkraft verschiebbar ist, vorzugsweise um eine Klemmkraft auf die Energiezelle 22a auszuüben. Das Federelement kann beispielsweise als eine Spiralfeder, eine Blattfeder, eine Wellenfeder, eine Drehfeder, eine Druckfeder, eine Kegelfeder, eine Tonnenfeder oder als ein anderes, einem Fachmann als sinnvoll erscheinendes Federelement ausgebildet sein.

Das weitere Klemmelement 28a ist verschieden von dem Klemmelement 18a ausgebildet. Die mehreren weiteren Klemmelemente 28a können beispielsweise zumindest teilweise identisch zueinander oder zumindest teilweise verschieden voneinander ausgebildet sein. Es ist denkbar, dass das weitere Klemmelement 28a aus einem elastischen, insbesondere gummielastischen, Material gebildet ist. Das zumindest eine weitere Klemmelement 28a ist bolzenförmig ausgebildet. Es ist alternativ auch denkbar, dass das zumindest eine weitere Klemmelement 28a stiftförmig, keilförmig, plattenförmig, würfelförmig, kugelförmig, rampenförmig ausgebildet ist oder eine andere, einem Fachmann als sinnvoll erscheinende Ausgestaltung aufweist.

Das zumindest eine weitere Klemmelement 28a ist dazu vorgesehen, das zumindest eine Zellenhalterelement 24a, insbesondere den Zellenhaltergrundkörper 40a, zu einem Verklemmen der Energiezelle 22a im Zellenhalterelement 24a zu verformen, um eine Klemmkraft auf die Energiezelle 22a zu erzeugen. Alternativ oder zusätzlich ist auch denkbar, dass das zumindest eine weitere Klemmelement 28a dazu vorgesehen ist, eine Klemmkraft unmittelbar auf die Energiezelle 22a zu einem Verklemmen der Energiezelle 22a im Zellenhalterelement 24a zu erzeugen. Das Klemmelement 18a ist dazu vorgesehen, eine Klemmkraft auf die Energiezelle 22a auszuüben, die quer, insbesondere senkrecht, besonders bevorzugt radial, relativ zu der Haupterstreckungsachse der Energiezelle 22a auf die Energiezelle 22a gerichtet ist. Das weitere Klemmelement 28a ist dazu vorgesehen, eine Klemmkraft auf die Energiezelle 22a auszuüben, die quer, insbesondere senkrecht, besonders bevorzugt radial, relativ zu der Haupterstreckungsachse der Energiezelle 22a auf die Energiezelle 22a gerichtet ist.

Das zumindest eine weitere Klemmelement 28a ist rotationssymmetrisch ausgebildet. Das zumindest eine weitere Klemmelement 28a ist keilartig ausgebildet. Das zumindest eine weitere Klemmelement 28a weist eine konische Form auf. Das zumindest eine weitere Klemmelement 28a ist, betrachtet parallel zu der Haupterstreckungsachse des weiteren Klemmelements 28a, keilartig ausgebildet.

Das keilartig ausgebildete weitere Klemmelement 28a ist spitzzulaufend ausgebildet. Das weitere Klemmelement 28a ist kegelförmig ausgebildet. Das weitere Klemmelement 28a weist die Form eines Kegelstumpfs auf. Alternativ ist auch denkbar, dass das zumindest eine weitere Klemmelement 28a eine kreiszylindrische Form aufweist, pyramidenförmig ausgebildet ist, oder eine andere, einem Fachmann als sinnvoll erscheinende Form für ein weiteres Klemmelement 28a aufweist. Das zumindest eine weitere Klemmelement 18a weist einen kreisförmigen Querschnitt auf. Alternativ ist auch denkbar, dass das zumindest eine weitere Klemmelement 18a eine polygonalen Querschnitt oder einen anderen, einem Fachmann als sinnvoll erscheinenden Querschnitt aufweist. Der Querschnitt des weiteren Klemmelements 28a verläuft in einer Ebene senkrecht zu einer Haupterstreckungsachse des weiteren Klemmelements 28a. Bevorzugt ist der Querschnitt des weiteren Klemmelements 28a rotationssymmetrisch, insbesondere in Bezug auf die Haupterstreckungsachse des weiteren Klemmelements 28a. Das weitere Klemmelement 28a ist im engeren Sinne rotationssymmetrisch, insbesondere hinsichtlich Rotationen um die Haupterstreckungsachse des weiteren Klemmelements 28a. Das im engeren Sinne rotationssymmetrisch ausgebildete weitere Klemmelement 28a ist derart ausgebildet, dass das weitere Klemmelement 28a eine Rotation um jeden beliebigen Winkel um die Haupterstreckungsachse auf sich selbst abbildet. Es ist alternativ auch denkbar, dass das weitere Klemmelement 28a, insbesondere der Querschnitt des weiteren Klemmelements 28a, eine n-zählige Rotationssymmetrie aufweist. n kann eine natürliche Zahl größer 1 sein. Das n-zählig rotationssymmetrisch ausgebildete weitere Klemmelement 28a bildet insbesondere eine Rotation um einen Winkel α = 360°/n um die Haupterstreckungsachse des weiteren Klemmelements 28a auf sich selbst ab. Beispielsweise bildet der Querschnitt des n-zählig rotationssymmetrisch ausgebildeten weiteren Klemmelements 28a ein Dreieck, ein Quadrat, ein Fünfeck, ein Sechseck oder eine andere, einem Fachmann als sinnvoll erscheinende n-zählig rotationssymmetrische geometrische Figur.

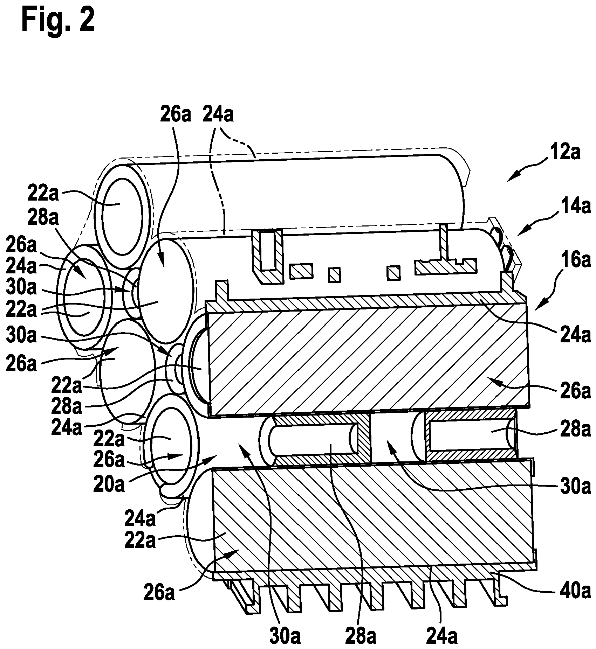

Das zumindest eine weitere Klemmelement 28a ist zu einer zusätzlichen Verklemmung der in dem Energiezellenaufnahmebereich 26a anordenbaren Energiezelle 22a in einem in dem Energiezellenaufnahmebereich 26a angeordneten Zustand der Energiezelle 22a an der Zellenhaltereinheit 16a, insbesondere variabel, anordenbar. Das zumindest eine weitere Klemmelement 28a ist separat zu der Zellenhaltereinheit 16a, insbesondere zumindest separat zu dem zumindest einen Zellenhalterelement 24a und/oder dem Zellenhaltergrundkörper 40a ausgebildet. Das zumindest eine weitere Klemmelement 28a ist dazu vorgesehen, zu einer zusätzlichen Verklemmung der in dem Energiezellenaufnahmebereich 26a anordenbaren Energiezelle 22a in dem in dem Energiezellenaufnahmebereich 26a angeordneten Zustand der Energiezelle 22a an der Zellenhaltereinheit 16a, insbesondere an dem Zellenhaltergrundkörper 40a, angebracht zu werden. Die Klemmeinheit 20a weist zumindest mehrere Klemmelementaufnahmen 30a auf, an, bevorzugt in, welchen jeweils zumindest eines der mehreren weiteren Klemmelemente 28a zu einer zusätzlichen Verklemmung der in dem Energiezellenaufnahmebereich 26a anordenbaren Energiezelle 22a in dem in dem Energiezellenaufnahmebereich 26a angeordneten Zustand der Energiezelle 22a anbringbar ist. Die Klemmelementaufnahmen 30a sind auf zumindest zwei voneinander abgewandten Seiten des Zellenhaltergrundkörpers 40a angeordnet (vgl. Figur 2). Alternativ ist auch denkbar, dass lediglich auf einer Seite des Zellenhaltergrundkörpers 40a Klemmelementaufnahmen 30a angeordnet sind. Die Klemmelementaufnahmen 30a sind verschieden von den Energiezellenaufnahmebereichen 26a. Alternativ ist auch denkbar, dass die Klemmeinheit 20a lediglich eine Klemmelementaufnahme 30a aufweist. Die mehreren Klemmelementaufnahmen 30a sind als Ausnehmungen, insbesondere als Aufnahmeschächte für die mehreren weiteren Klemmelemente 28a, in dem Zellenhaltergrundkörper 40a ausgebildet. Die Klemmelementaufnahmen 30a sind zwischen den Energiezellenaufnahmebereichen 26a angeordnet. Die mehreren Klemmelementaufnahmen 30a sind beabstandet zueinander angeordnet. Die mehreren Klemmelementaufnahmen 30a sind zumindest im Wesentlichen identisch ausgebildet. Alternativ ist jedoch auch denkbar, dass die mehreren Klemmelementaufnahmen 30a zumindest teilweise verschieden ausgebildet sind.

Die Klemmelementaufnahmen 30a sind jeweils sich verjüngend ausgebildet. Die Klemmelementaufnahmen 30a sind jeweils ausgehend von einer Oberfläche des Zellenhaltergrundkörpers 40a sich in Richtung eines tiefsten Punkts der jeweiligen Klemmelementaufnahme 30a verjüngend ausgebildet. Die jeweils durch eine Wandung der Zellenhaltereinheit 16a, insbesondere des Zellenhaltergrundkörpers 40a, zumindest teilweise begrenzten Klemmelementaufnahmen 30a weisen einen rotationssymmetrischen Querschnitt auf. Der jeweilige Querschnitt der Klemmelementaufnahmen 30a verläuft in einer Ebene, die parallel zu einer Haupterstreckungsachse der jeweiligen Klemmelementaufnahme 30a verläuft. Der Querschnitt der Klemmelementaufnahmen 30a ist jeweils rotationssymmetrisch im engeren Sinne, wobei der Querschnitt der Klemmelementaufnahmen 30a jeweils einen Kreis bildet. Alternativ ist denkbar, dass die Querschnitte der Klemmelementaufnahmen 30a zumindest teilweise n-zählig rotationssymmetrisch sind, insbesondere zumindest hinsichtlich Rotationen um die jeweilige Haupterstreckungsachse der Klemmelementaufnahmen 30a. Alternativ ist auch denkbar, dass die Klemmelementaufnahmen 30a zumindest teilweise frei von einer sich verjüngenden Form ausgebildet sind.

Die Klemmeinheit 20a ist derart ausgebildet, dass eine Klemmkraft auf die zumindest eine in dem Energiezellenaufnahmebereich 26a anordenbare Energiezelle 22a in einem in dem Energiezellenaufnahmebereich 26a angeordneten Zustand der Energiezelle 22a durch eine Anordnung des zumindest einen weiteren Klemmelements 28a relativ zu dem Energiezellenaufnahmebereich 26a einstellbar ist. Eine Klemmkraft auf die in dem Energiezellenaufnahmebereich 26a anordenbare Energiezelle 22a in einem in dem Energiezellenaufnahmebereich 26a angeordneten Zustand der Energiezelle 22a ist durch eine variable Anordnung des weiteren Klemmelements 28a an, vorzugsweise in, der Klemmelementaufnahme 30a einstellbar. Es ist auch denkbar, dass eine Klemmkraft auf die in dem Energiezellenaufnahmebereich 26a anordenbare Energiezelle 22a in einem in dem Energiezellenaufnahmebereich 26a angeordneten Zustand der Energiezelle 22a davon abhängt, an, bevorzugt in, welcher der mehreren Klemmelementaufnahmen 30a weitere Klemmelemente 28a angeordnet sind.

Das weitere Klemmelement 28a ist zu einem zusätzlichen Verklemmen der in dem Energiezellenaufnahmebereich 26a anordenbaren Energiezelle 22a in einem in dem Energiezellenaufnahmebereich 26a angeordneten Zustand der Energiezelle 22a in die Zellenhaltereinheit 16a einschiebbar. Das zumindest eine weitere Klemmelement 28a ist in die als Ausnehmung in dem Zellenhaltergrundkörper 40a ausgebildete Klemmelementaufnahme 30a zu einem zusätzlichen Verklemmen der in dem Energiezellenaufnahmebereich 26a anordenbaren Energiezelle 22a in einem in dem Energiezellenaufnahmebereich 26a angeordneten Zustand der Energiezelle 22a einschiebbar. Das weitere Klemmelement 28a ist dazu vorgesehen, durch ein Einschieben des weiteren Klemmelements 28a in die Zellenhaltereinheit 16a, insbesondere in die Klemmelementaufnahme 30a, die Zellenhaltereinheit 16a, insbesondere den Zellenhaltergrundkörper 40a und vorzugsweise das Zellenhalterelement 24a, zu verformen. Das weitere Klemmelement 28a ist derart in die Zellenhaltereinheit 16a, vorzugsweise in den Zellenhaltergrundkörper 40a, bevorzugt in die Klemmelementaufnahme 30a, einschiebbar, dass durch die dadurch erzeugbare Verformung der Zellenhaltereinheit 16a, insbesondere des Zellenhaltergrundkörpers 40a und besonders bevorzugt des zumindest einen Zellenhalterelements 24a, eine Klemmkraft auf die in dem Energiezellenaufnahmebereich 26a anordenbare Energiezelle 22a in einem in dem Energiezellenaufnahmebereich 26a angeordneten Zustand der Energiezelle 22a erzeugbar ist. Die Klemmelementaufnahme 30a ist beabstandet zu dem Energiezellenaufnahmebereich 26a angeordnet.

Über eine Einschubtiefe des zumindest einen weiteren Klemmelements 28a relativ zu der Zellenhaltereinheit 16a ist eine auf die Energiezelle 22a wirkende Klemmkraft einstellbar. Eine Verformung des Zellenhaltergrundkörpers 40a, insbesondere des Zellenhalterelements 24a, und damit eine Klemmkraft auf die in dem Energiezellenaufnahmebereich 26a anordenbare Energiezelle 22a in einem in dem Energiezellenaufnahmebereich 26a angeordneten Zustand der Energiezelle 22a ist abhängig von einer Einschubtiefe des zumindest einen weiteren Klemmelements 18a relativ zu der Zellenhaltereinheit 16a, insbesondere relativ zu dem Zellenhaltergrundkörper 40a, bevorzugt relativ zu der Klemmelementaufnahme 30a. Eine Verformung des Zellenhaltergrundkörpers 40a, insbesondere des Zellenhalterelements 24a, und damit auch eine Klemmkraft auf die in dem Energiezellenaufnahmebereich 26a anordenbare Energiezelle 22a in einem in dem Energiezellenaufnahmebereich 26a angeordneten Zustand der Energiezelle 22a, ist durch ein tieferes Einschieben des weiteren Klemmelements 28a relativ zu der Zellenhaltereinheit 16a, insbesondere der Klemmelementaufnahme 30a, erhöhbar.

Alternativ ist jedoch auch denkbar, dass die Klemmelementaufnahme 30a, insbesondere direkt, an dem Energiezellenaufnahmebereich 26a anliegt. Insbesondere ist die Klemmelementaufnahme 30a alternativ relativ zu dem Energiezellenaufnahmebereich 26a derart angeordnet, dass das zumindest eine weitere Klemmelement 28a derart in die Zellenhaltereinheit 16a, vorzugsweise in den Zellenhaltergrundkörper 40a, bevorzugt in die Klemmelementaufnahme 30a, einschiebbar ist, dass das zumindest eine weitere Klemmelement 28a direkt an der in dem Energiezellenaufnahmebereich 26a anordenbare Energiezelle 22a in einem in dem Energiezellenaufnahmebereich 26a angeordneten Zustand der Energiezelle 22a anliegt und eine Klemmkraft von dem weiteren Klemmelement 28a unmittelbar auf die Energiezelle 22a erzeugbar ist.

Die Energiezellenhaltevorrichtung 14a' umfasst zumindest eine Zellenhaltereinheit 16a' zu einer Aufnahme zumindest einer Energiezelle 22a'. Die Zellenhaltereinheit 16a' weist zumindest ein Zellenhalterelement 24a' auf, das zumindest einen Energiezellenaufnahmebereich 26a', insbesondere eine Einzelenergiezellenaufnahme, für die Energiezelle 22a' zumindest teilweise begrenzt. Die Energiezellenhaltevorrichtung 14a' umfasst zumindest eine Klemmeinheit 20a'. Die Klemmeinheit 20a' umfasst zumindest ein Klemmelement 18a', das dazu vorgesehen ist, die in dem Energiezellenaufnahmebereich 26a' anordenbare Energiezelle 22a' in einem in dem Energiezellenaufnahmebereich 26a' angeordneten Zustand der Energiezelle 22a' im Zellenhalterelement 24a' zu verklemmen. Die Zellenhaltereinheit 16a und die Zellenhaltereinheit 16a' sowie das Klemmelement 18a und das Klemmelement 18a' sind zumindest im Wesentlichen identisch ausgebildet. Die Klemmeinheit 20a' ist frei von weiteren bolzenförmig oder dergleichen ausgebildeten Klemmelementen 28a, wobei die Klemmeinheit 20a' Klemmelementaufnahmen 30a' zu einer Aufnahme von bolzenförmig oder dergleichen ausgebildeten weiteren Klemmelementen 28a aufweist. Der Akkupack 12a und der weitere Akkupack 12a' sind dazu vorgesehen, eine gleiche Anzahl von Energiezellen 22a aufzunehmen. Es ist denkbar, dass sich die Energiezellen 22a des Akkupacks 12a und des weiteren Akkupacks 12a' hinsichtlich einer Kapazität unterscheiden. Es ist auch denkbar, dass die Energiezellen 22a des Akkupacks 12a und des weiteren Akkupacks 12a' eine identische Kapazität aufweisen, wobei die Energiezellen 22a des Akkupacks 12a und des weiteren Akkupacks 12a', beispielsweise fertigungsbedingte, Abmessungsunterschiede relativ zueinander aufweisen.

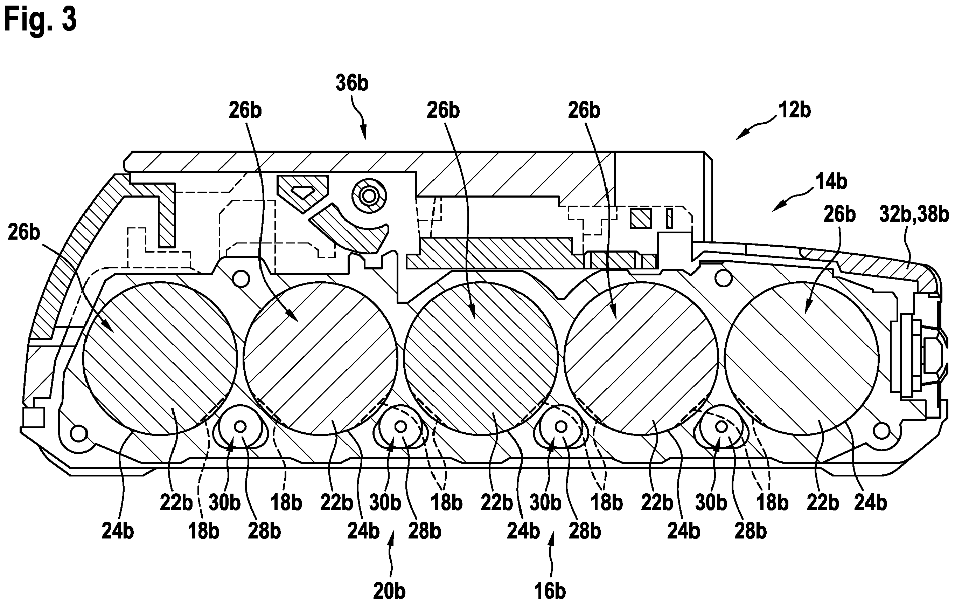

In den Figuren 3 bis 7 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 7 ist der Buchstabe a durch die Buchstaben b, c und d ersetzt.

Figur 3 zeigt einen Akkupack 12b mit einer Energiezellenhaltevorrichtung 14b. Der Akkupack 12b umfasst zumindest ein Akkupackgehäuse 38b. Das Akkupackgehäuse 38b weist eine mechanische und/oder elektrische Schnittstelle 36b zur lösbaren Verbindung mit einer Verbrauchereinheit auf. Der Akkupack 12b weist mehrere Energiezellen 22b auf. Die mehreren Energiezellen 22b des Akkupacks 12b sind einlagig angeordnet. Die Energiezellenhaltevorrichtung 14b umfasst zumindest eine Zellenhaltereinheit 16b zu einer Aufnahme der mehreren Energiezellen 22b des Akkupacks 12b. Es ist alternativ auch denkbar, dass die Zellenhaltereinheit 16b zu einer Aufnahme lediglich einer Energiezelle 22b vorgesehen ist. Die Zellenhaltereinheit 16b weist zumindest mehrere Zellenhalterelemente 24b auf, die jeweils zumindest einen Energiezellenaufnahmebereich 26b, insbesondere eine Einzelenergiezellenaufnahme, für jeweils eine Energiezelle 22b der mehreren Energiezellen 22b zumindest teilweise begrenzen. Alternativ ist auch denkbar, dass die Zellenhaltereinheit 16b lediglich ein Zellenhalterelement 24b aufweist. Die Energiezellenhaltevorrichtung 14b umfasst zumindest eine Klemmeinheit 20b. Die Klemmeinheit 20b umfasst mehrere Klemmelemente 18b, die dazu vorgesehen sind, die in den jeweiligen Energiezellenaufnahmebereichen 26b anordenbaren Energiezellen 22b in einem in dem jeweiligen Energiezellenaufnahmebereich 26b angeordneten Zustand der Energiezellen 22b im jeweiligen Zellenhalterelement 24b zu verklemmen. Die Klemmeinheit 20b weist mehrere weitere Klemmelemente 28b auf, die zu einer zusätzlichen Verklemmung der in dem jeweiligen Energiezellenaufnahmebereich 26b anordenbaren Energiezelle 22b ausgebildet sind. Die Klemmeinheit 20b weist zumindest mehrere Klemmelementaufnahmen 30b auf, an, bevorzugt in, welchen jeweils zumindest eines der mehreren weiteren Klemmelemente 28b zu einer zusätzlichen Verklemmung einer in dem Energiezellenaufnahmebereich 26b anordenbaren Energiezelle 22b in dem in dem Energiezellenaufnahmebereich 26b angeordneten Zustand der Energiezelle 22b anbringbar ist.

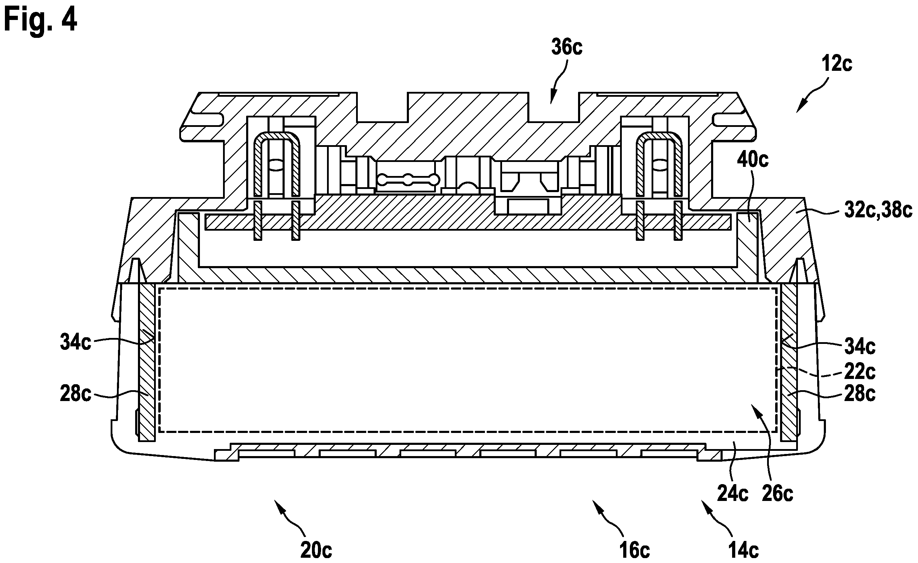

Figur 4 zeigt einen Akkupack 12c mit einer Energiezellenhaltevorrichtung 14c. Der Akkupack 12c umfasst zumindest ein Akkupackgehäuse 38c. Das Akkupackgehäuse 38c weist eine mechanische und/oder elektrische Schnittstelle 36c zur lösbaren Verbindung mit einer Verbrauchereinheit auf. Der Akkupack 12c weist mehrere Energiezellen 22c auf. Die mehreren Energiezellen 22c des Akkupacks 12c sind einlagig angeordnet. Die Energiezellenhaltevorrichtung 14c umfasst zumindest eine Zellenhaltereinheit 16c zu einer Aufnahme mehrerer Energiezellen 22c. Die Zellenhaltereinheit 16c weist mehrere Zellenhalterelemente 24c auf, die jeweils zumindest einen Energiezellenaufnahmebereich 26c, insbesondere eine Einzelenergiezellenaufnahme, für jeweils eine der mehreren Energiezellen 22c zumindest teilweise begrenzen. Die Energiezellenhaltevorrichtung 14c umfasst zumindest eine Klemmeinheit 20c. Die Klemmeinheit 20c umfasst mehrere Klemmelemente (hier nicht dargestellt). Im Folgenden werden die mehreren Klemmelemente beispielhaft anhand eines einzelnen Klemmelements der mehreren Klemmelemente beschrieben. Das zumindest eine Klemmelement ist in dem Energiezellenaufnahmebereich 26c angeordnet. Das Klemmelement ist durch das Zellenhalterelement 24c gebildet. Alternativ ist jedoch auch denkbar, dass das Klemmelement separat zu dem Zellenhalterelement 24c ausgebildet ist. Das Klemmelement ist als ein elastisches, insbesondere gummielastisches, Element ausgebildet. Das Klemmelement ist dazu vorgesehen, einen Querschnitt des Energiezellenaufnahmebereichs 26c zu verkleinern, insbesondere derart, dass die Energiezelle 22c nur durch eine Verformung des Klemmelements und/oder der Zellenhaltereinheit 16c, insbesondere eines Zellenhaltergrundkörpers 40c der Zellenhaltereinheit 16c, bevorzugt des Zellenhalterelements 24c, in dem Energiezellenaufnahmebereich 26c anordenbar ist. Das Klemmelement ist stegartig ausgebildet. Alternativ ist jedoch auch denkbar, dass das Klemmelement noppenartig oder polygonförmig ausgebildet ist oder eine andere, einem Fachmann als sinnvoll erscheinende Form aufweist. Die Energiezelle 22c ist mit dem Zellenhalterelement 24c infolge einer durch eine Verformung des Klemmelements und/oder der Zellenhaltereinheit 16c, insbesondere des Zellenhaltergrundkörpers 40c, bevorzugt des Zellenhalterelements 24c, bei einer Anordnung der Energiezelle 22c in dem Energiezellenaufnahmebereich 26c erzeugbaren Rückstellkraft mit dem Zellenhalterelement 24c verklemmbar.

Die Klemmeinheit 20c weist mehrere, insbesondere zwei, weitere Klemmelemente 28c auf, die zu einer zusätzlichen Verklemmung der in dem jeweiligen Energiezellenaufnahmebereich 26c anordenbaren mehreren Energiezellen 22c ausgebildet sind. Die mehreren weiteren Klemmelemente 28c sind jeweils an einer Seitenfläche 34c der Zellenhaltereinheit 16c anordenbar. Die, insbesondere zwei, weiteren Klemmelemente 28c sind an einander abgewandten Seitenflächen 34c der Zellenhaltereinheit 16c angeordnet. Alternativ ist jedoch auch denkbar, dass lediglich an einer der Seitenflächen 34c zumindest eines der mehreren weiteren Klemmelemente 28c angeordnet ist. Im Folgenden werden die mehreren weiteren Klemmelemente 28c beispielhaft anhand eines einzelnen weiteren Klemmelements 28c der mehreren weiteren Klemmelemente 28c beschrieben. Die Energiezellenhaltevorrichtung 14c umfasst ein Gehäuse 32c, in dem die Zellenhaltereinheit 16c anordenbar ist. Das weitere Klemmelement 28c ist dazu vorgesehen, durch ein Verschließen des Gehäuses 32c die zumindest eine in dem Energiezellenaufnahmebereich 26c anordenbare Energiezelle 22c in einem in dem Energiezellenaufnahmebereich 26c angeordneten Zustand der Energiezelle 22c mit dem Zellenhalterelement 24c zu verklemmen. Das Akkupackgehäuse 38c des Akkupacks 12c entspricht dem Gehäuse 32c.

Das weitere Klemmelement 28c ist dazu vorgesehen, eine durch das Verschließen des Gehäuses 32c der Energiezellenhaltevorrichtung 14c auf das weitere Klemmelement 28c ausübbare Kraft auf die Zellenhaltereinheit 16c zu übertragen, vorzugsweise zu einer Verformung der Zellenhaltereinheit 16c, bevorzugt des Zellenhaltergrundkörpers 40c und besonders bevorzugt des Zellenhalterelements 24c, um eine Klemmkraft auf die in dem Energiezellenaufnahmebereich 26c anordenbare Energiezelle 22c in einem in dem Energiezellenaufnahmebereich 26c angeordneten Zustand der Energiezelle 22c zu erzeugen. Das an der Seitenfläche 34c der Zellenhaltereinheit 16c, insbesondere an einer Seitenfläche 34c des Zellenhaltergrundkörpers 40c, anordenbare, insbesondere aus einem elastischen, insbesondere gummielastischen, Material gebildete, weitere Klemmelement 28c ist plattenförmig ausgebildet. Es ist alternativ auch denkbar, dass das an der Seitenfläche 34c der Zellenhaltereinheit 16c, insbesondere an der Seitenfläche 34c des Zellenhaltergrundkörpers 40c, anordenbare, bevorzugt aus einem elastischen, insbesondere gummielastischen, Material gebildete weitere Klemmelement 28c würfelförmig, kugelförmig oder dergleichen ausgebildet ist. Das weitere Klemmelement 28c ist dazu vorgesehen, eine Klemmkraft auf die Energiezelle 22c auszuüben, die zumindest im Wesentlichen parallel zu einer Haupterstreckungsachse der Energiezelle 22c auf die Energiezelle 22c gerichtet ist.

Die Klemmeinheit 20c ist derart ausgebildet, dass der Energiezellenaufnahmebereich 26c über eine Wärmezufuhr vergrößerbar ist. Das zumindest eine Klemmelement ist derart ausgebildet, dass das Klemmelement über eine Wärmezufuhr vergrößerbar ist, insbesondere um die zumindest ein Energiezelle 22c in den Energiezellenaufnahmebereich 26c einzubringen. Die Zellenhaltereinheit 16c, insbesondere der Zellenhaltergrundkörper 40c, bevorzugt das Zellenhalterelement 24c, ist dazu vorgesehen, durch die Wärmezufuhr erweicht und ausgedehnt zu werden, um ein Einbringen der zumindest einen Energiezelle 22c in den Energiezellenaufnahmebereich 26c zu ermöglichen. Die Zellenhaltereinheit 16c, insbesondere der Zellenhaltergrundkörper 40c, bevorzugt das Zellenhalterelement 24c, ist dazu vorgesehen, sich nach einem infolge der Wärmezufuhr der Zellenhaltereinheit 16c, insbesondere des Zellenhaltergrundkörpers 40c, bevorzugt des Zellenhalterelements 24c, ermöglichten Einbringen der Energiezelle 22c in den Energiezellenaufnahmebereich 26c, abzukühlen und sich dadurch zusammenzuziehen, wodurch vorzugsweise mittels der Klemmeinheit 20c, insbesondere des Klemmelements, eine Klemmkraft auf die Energiezelle 22c in einem in dem Energiezellenaufnahmebereich 26c angeordneten Zustand der Energiezelle 22c erzeugbar ist. Die Wärmezufuhr, bevorzugt zur Vergrößerung der Zellenhaltereinheit 16c, insbesondere des Zellenhaltergrundkörpers 40c, bevorzugt des Zellenhalterelements 24c, ist beispielsweise mittels eines Heißluftföns, eines Ofens oder dergleichen erzeugbar.

Es ist denkbar, dass die Klemmeinheit 20c frei von, insbesondere durch Ausnehmungen in der Zellenhaltereinheit 16c, vorzugswese in dem Zellenhaltergrundkörper 40c, gebildeten, Klemmelementaufnahmen zur Aufnahme von bolzenförmig oder dergleichen ausgebildeten Klemmelementen ausgebildet ist. Ferner ist beispielsweise alternativ auch denkbar, dass die Klemmeinheit 20c zumindest das eine Klemmelement, zumindest das eine an der Seitenfläche 34c der Zellenhaltereinheit 16c, insbesondere des Zellenhaltergrundkörpers 40c, anordenbare weitere Klemmelement 28c aufweist, und zumindest ein bolzenförmig oder dergleichen ausgebildetes zusätzliches Klemmelement umfasst.

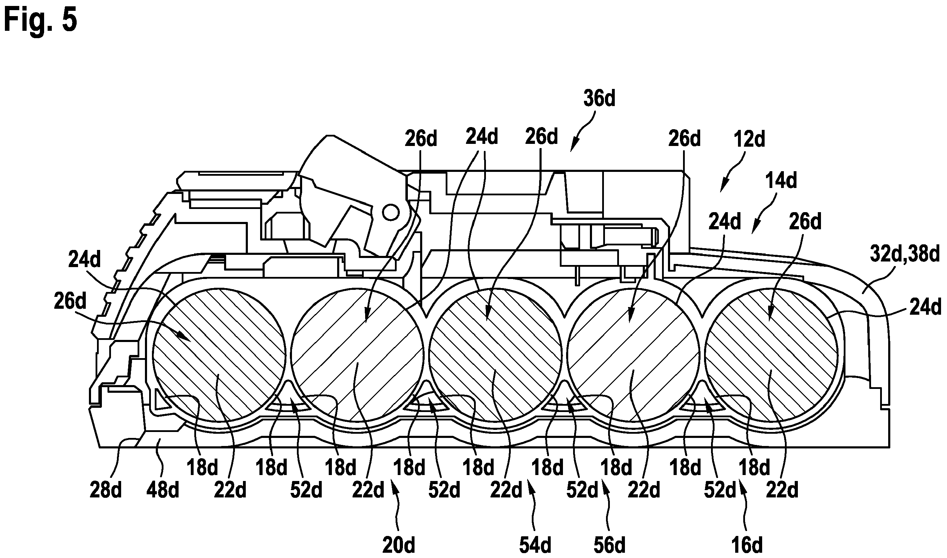

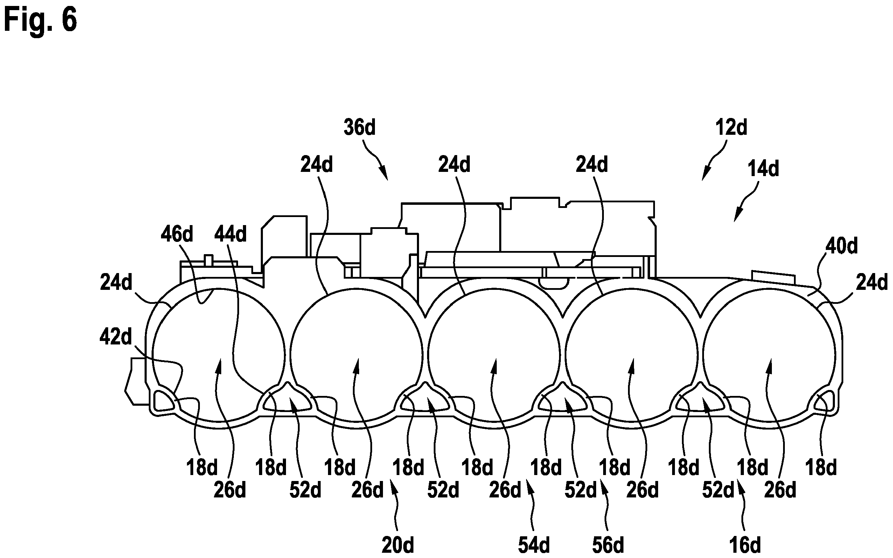

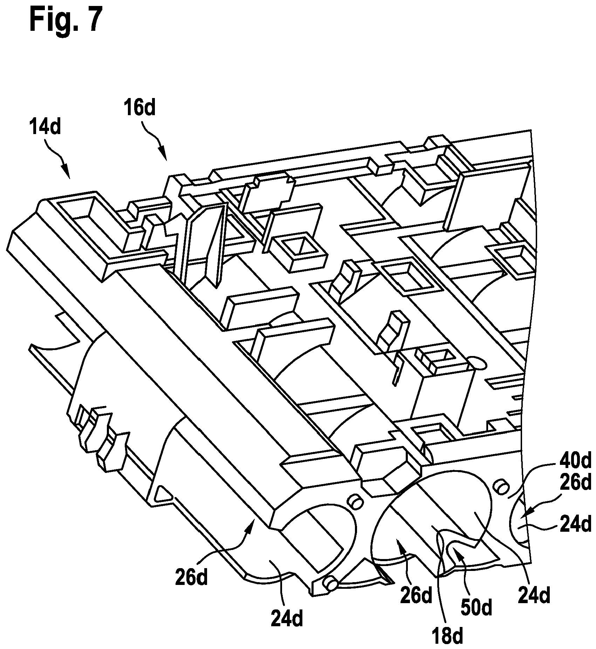

Figur 5 zeigt einen Akkupack 12d mit einer Energiezellenhaltevorrichtung 14d (vgl. auch Figuren 6 und 7). Der Akkupack 12d umfasst zumindest ein Akkupackgehäuse 38d. Das Akkupackgehäuse 38d weist eine mechanische und/oder elektrische Schnittstelle 36d zur lösbaren Verbindung mit einer Verbrauchereinheit auf. Der Akkupack 12d weist mehrere Energiezellen 22d auf. Die mehreren Energiezellen 22d des Akkupacks 12d sind einlagig angeordnet. Die Energiezellenhaltevorrichtung 14d umfasst zumindest eine Zellenhaltereinheit 16d zu einer Aufnahme der mehreren Energiezellen 22d des Akkupacks 12d. Es ist alternativ auch denkbar, dass die Zellenhaltereinheit 16d zu einer Aufnahme lediglich einer Energiezelle 22d vorgesehen ist. Die Zellenhaltereinheit 16d weist zumindest mehrere Zellenhalterelemente 24d auf, die jeweils zumindest einen Energiezellenaufnahmebereich 26d, insbesondere eine Einzelenergiezellenaufnahme, für jeweils eine Energiezelle 22d der mehreren Energiezellen 22d zumindest teilweise begrenzen. Alternativ ist auch denkbar, dass die Zellenhaltereinheit 16d lediglich ein Zellenhalterelement 24d aufweist.

Die Energiezellenhaltevorrichtung 14d umfasst zumindest eine Klemmeinheit 20d. Die Klemmeinheit 20d ist insbesondere für Akkupacks 12d mit einlagig angeordneten Energiezellen 22d vorgesehen. Die Klemmeinheit 20d umfasst mehrere Klemmelemente 18d, die dazu vorgesehen sind, die in den jeweiligen Energiezellenaufnahmebereichen 26d anordenbaren Energiezellen 22d in einem in dem jeweiligen Energiezellenaufnahmebereich 26d angeordneten Zustand der Energiezellen 22d im jeweiligen Zellenhalterelement 24d zu verklemmen. In den Energiezellenaufnahmebereichen 26d sind jeweils zwei Klemmelemente 18d angeordnet. Die Energiezellen 22d sind in einem Querschnitt betrachtet über jeweils drei Klemmpunkte 42d, 44d, 46d verklemmt. Die Energiezellenaufnahmebereiche 26d weisen jeweils eine Haupterstreckungsachse auf. Die jeweilige Haupterstreckungsachse der Energiezellenaufnahmebereiche 26d verläuft zumindest im Wesentlichen parallel zu einer Haupterstreckungsachse der jeweiligen Energiezelle 22d in einem in dem Energiezellenaufnahmebereich 26d angeordneten Zustand der zumindest einen Energiezelle 22d. Der Querschnitt verläuft in einer Ebene, die senkrecht zu einer Haupterstreckungsachse des jeweiligen Energiezellenaufnahmebereichs 26d verläuft. Zumindest ein Klemmpunkt 46d der jeweils drei Klemmpunkte 42d, 44d, 46d ist verschieden von den zwei Klemmelementen 18d, die insbesondere in dem jeweiligen Energiezellenaufnahmebereich 26d angeordnet sind. Der Klemmpunkt 46d der jeweils drei Klemmpunkte 42d, 44d, 46d ist von einer den jeweiligen Energiezellenaufnahmebereich 26d zumindest teilweise begrenzenden Fläche des Zellenhalterelements 24d gebildet, die verschieden ist von den jeweils zwei Klemmelementen 18d. Die Energiezellen 22d liegen betrachtet in dem Querschnitt in einem in den jeweiligen Energiezellenaufnahmebereich 26d angeordneten Zustand der Energiezellen 22d zumindest an den jeweils drei Klemmpunkten 42d, 44d, 46d an, bevorzugt lediglich an den jeweils drei Klemmpunkten 42d, 44d, 46d an.

Die Klemmeinheit 20d weist zumindest ein weiteres Klemmelement 28d auf, das zu einer zusätzlichen Verklemmung der in den Energiezellenaufnahmebereichen 26d anordenbaren Energiezellen 22d ausgebildet ist. Das weitere Klemmelement 28d ist durch das Akkupackgehäuse 38d gebildet. Das weitere Klemmelement 28d ist durch ein außenliegendes Gehäuseteil des Akkupackgehäuses 38d gebildet. Das weitere Klemmelement 28d ist durch einen Akkupackgehäuseboden 48d des Akkupackgehäuses 38d gebildet. Alternativ ist auch denkbar, dass das weitere Klemmelement 28d von einem Akkupackgehäusedeckel des Akkupackgehäuses 38d oder von einem anderen, einem Fachmann als sinnvoll erscheinenden Gehäuseteil des Akkupackgehäuses 38d gebildet ist. Das durch das Akkupackgehäuse 38d, insbesondere den Akkupackgehäuseboden 48d, ausgebildete weitere Klemmelement 28d ist dazu vorgesehen, durch ein Verschließen des Akkupackgehäuses 38d die in dem in den Energiezellenaufnahmebereichen 26d anordenbaren Energiezellen 22d in einem in dem Energiezellenaufnahmebereichen 26d angeordneten Zustand der Energiezellen 22d mit den Zellenhalterelementen 24d zu verklemmen. Das durch das Akkupackgehäuse 38d, insbesondere den Akkupackgehäuseboden 48d, ausgebildete weitere Klemmelement 28d ist dazu vorgesehen, eine durch das Verschließen des Akkupackgehäuses 38d erzeugbare Kraft auf die Zellenhaltereinheit 16d zu übertragen, zu einer Verformung der Zellenhaltereinheit 16d, bevorzugt des Zellenhaltergrundkörpers 40d und besonders bevorzugt der Zellenhalterelemente 24d, um eine Klemmkraft auf die in den Energiezellenaufnahmebereichen 26d anordenbaren Energiezellen 22d in einem in den Energiezellenaufnahmebereichen 22d angeordneten Zustand der Energiezellen 22d zu erzeugen.

Die Zellenhaltereinheit 16d, insbesondere der Zellenhaltergrundkörper 40d, weist mehrere Dämpfungselemente 52d auf. Insbesondere ist jeweils zwischen zwei Zellenhalterelementen 24d jeweils eines der Dämpfungselemente 52d angeordnet. Die Dämpfungselemente 52d sind zumindest zu einer Dämpfung von einer äußeren Krafteinwirkung, beispielsweise durch Stöße oder dergleichen, auf die Energiezellenhaltevorrichtung 14d, insbesondere die Zellenhaltereinheit 16d, vorgesehen. Die Dämpfungselemente 52d begrenzen jeweils eine Ausnehmung in dem Zellenhaltergrundkörper 40d. Die von den Dämpfungselementen 52d begrenzten Ausnehmungen weisen, insbesondere zumindest betrachtet in einem Querschnitt der Zellenhaltereinheit 16d, vorzugsweise des Zellenhaltergrundkörpers 40d, jeweils eine Dreiecksform auf, wobei der Querschnitt bevorzugt in einer Ebene verläuft, die senkrecht zu der Haupterstreckungsachse der Energiezellenaufnahmebereiche 26d und/oder einer Haupterstreckungsachse der dreieckförmigen Ausnehmungen angeordnet ist. Alternativ ist auch denkbar, dass die von den Dämpfungselementen 52d begrenzten Ausnehmungen eine von einer Dreiecksform verschiedene, einem Fachmann als sinnvoll erscheinende Form aufweisen.

Die dreiecksförmigen Ausnehmungen, insbesondere jeweils zwei Seiten der dreiecksförmigen Ausnehmungen, sind jeweils von zwei Klemmelementen 18d der Klemmelemente 18d zumindest teilweise begrenzt. Ein an einer Außenseite 54d des Zellenhaltergrundkörpers 40d, insbesondere an einer Unterseite 56d des Zellenhaltergrundkörpers 40d, angeordneter Teil des Zellenhaltergrundkörpers 40d begrenzt die dreiecksförmigen Ausnehmungen, insbesondere eine dritte Seite der dreiecksförmigen Ausnehmungen, zumindest teilweise. Die Dämpfungselemente 52d sind jeweils von den jeweils zwei Klemmelementen 18d, die die jeweilige dreiecksförmige Ausnehmung, insbesondere jeweils zwei Seiten der dreiecksförmigen Ausnehmung, zumindest teilweise begrenzen, und dem an der Außenseite 54d des Zellenhaltergrundkörpers 40d, insbesondere an der Unterseite 56d des Zellenhaltergrundkörpers 40d, angeordneten Teil des Zellenhaltergrundkörpers 40d, der die jeweilige dreiecksförmige Ausnehmung, bevorzugt die dritte Seite der dreiecksförmigen Ausnehmung, zumindest teilweise begrenzt, gebildet. Die Unterseite 56d ist auf einer dem Akkupackgehäuseboden 48d zugewandten Seite der Zellenhaltereinheit 16d angeordnet. Die Unterseite 56d ist auf einer der Schnittstelle 36d abgewandten Seite der Zellenhaltereinheit 16d angeordnet. Die Dämpfungselemente 52d sind dazu vorgesehen, durch eine Verformung der Dämpfungselemente 52d, eine unerwünschte äußere Krafteinwirkung, beispielsweise durch Stöße oder dergleichen, auf die Zellenhaltereinheit 16d, insbesondere die Energiezellen 22d, zu dämpfen.

Der an der Außenseite 54d des Zellenhaltergrundkörpers 40d, insbesondere an der Unterseite 56d des Zellenhaltergrundkörpers 40d, angeordnete Teil des Zellenhaltergrundkörpers 40d, der die dreiecksförmigen Ausnehmungen, bevorzugt die dritte Seite der dreiecksförmigen Ausnehmungen, zumindest teilweise begrenzt, ist dazu vorgesehen, mit dem Akkupackgehäuseboden 48d bei einem Verschließen des Akkupackgehäuses 38d zusammenzuwirken, um die zusätzliche Klemmkraft auf die Energiezellen 22d, insbesondere über die Klemmelemente 18d zu übertragen. Durch das Verschließen des Akkupackgehäuses 38d ist insbesondere eine Verformung des an der Außenseite 54d des Zellenhaltergrundkörpers 40d, insbesondere an der Unterseite 56d des Zellenhaltergrundkörpers 40d, angeordneten Teils des Zellenhaltergrundkörpers 40d, erzeugbar, die eine Bewegung der Klemmelemente 18d in Richtung der Energiezellen 22d zu einer zusätzlichen Verklemmung der Energiezellen 22d mit den Zellenhalterelementen 24d erzeugt.

Die Zellenhaltereinheit 16d weist zumindest ein Einführelement 50d auf, um ein Einführen einer Energiezelle 22d in den Energiezellenaufnahmebereich 26d bei einer Montage zu unterstützen. An zumindest einem Zellenhalterelement 24d der Zellenhalterelemente 24d ist das zumindest eine Einführelement 50d angeordnet. Es ist denkbar, dass an den Zellenhalterelementen 24d jeweils ein Einführelement 50d angeordnet ist. Es ist auch denkbar, dass an den Zellenhalterelementen 24d jeweils mehr als ein Einführelement 50d angeordnet ist. Ferner ist alternativ auch denkbar, dass zumindest ein Zellenhalterelement 24d der Zellenhalterelemente 24d frei von einem Einführelement 50d ist. Das zumindest eine Einführelement 50d ist als eine Aussparung in der den Energiezellenaufnahmebereich 26d zumindest teilweise begrenzenden Fläche der Zellenhalterelements 24d ausgebildet. Das Einführelement 50d ist an einem Ende des Zellenhalterelements 24d angeordnet, zumindest betrachtet entlang der Haupterstreckungsachse des Energiezellenaufnahmebereichs 26d des Zellenhalterelements 24d. Das als Aussparung ausgebildete Einführelement 50d ist U-förmig. Alternativ ist auch denkbar, dass das als Aussparung ausgebildete Einführelement 50d V-förmig oder dergleichen ist. Ferner ist alternativ denkbar, dass das zumindest eine Einführelement 50d als ein anderes, von einer Aussparung verschiedenes, einem Fachmann als sinnvoll erscheinendes Einführelement ausgebildet ist.

## Patentansprüche

1. Energiezellenhaltevorrichtung (14a) für eine Energiespeichervorrichtung , insbesondere einen Akkupack (12a,), mit zumindest einer Zellenhaltereinheit (16a,) zu einer Aufnahme zumindest einer Energiezelle (22a), wobei die Zellenhaltereinheit (16a) zumindest ein Zellenhalterelement (24a) aufweist, das zumindest einen Energiezellenaufnahmebereich (26a), insbesondere eine Einzelenergiezellenaufnahme, für die Energiezelle (22a) zumindest teilweise begrenzt, und mit zumindest einer Klemmeinheit (20a), die zumindest ein Klemmelement (18a, 18a') umfasst, das dazu vorgesehen ist, die in dem Energiezellenaufnahmebereich (26a) anordenbare Energiezelle (22a) in einem in dem Energiezellenaufnahmebereich (26a,) angeordneten Zustand der Energiezelle (22a) im Zellenhalterelement (24a) zu verklemmen, **dadurch gekennzeichnet, dass** die Klemmeinheit (20a) zumindest ein weiteres Klemmelement (28a) aufweist, das zu einer zusätzlichen Verklemmung der in dem Energiezellenaufnahmebereich (26a) anordenbaren Energiezelle (22a) ausgebildet ist.

2. Energiezellenhaltevorrichtung (14a) nach Anspruch 1, **dadurch gekennzeichnet, dass** das weitere Klemmelement (28a) zu einer zusätzlichen Verklemmung der in dem Energiezellenaufnahmebereich (26a) anordenbaren Energiezelle (22a) in einem in dem Energiezellenaufnahmebereich (26a) angeordneten Zustand der Energiezelle (22a) an der Zellenhaltereinheit (16a), insbesondere variabel, anordenbar ist.

3. Energiezellenhaltevorrichtung (14a) nach Anspruch 1 oder 2, **dadurch gekennzeichnet, dass** die Klemmeinheit (20a) derart ausgebildet ist, dass eine Klemmkraft auf eine in dem Energiezellenaufnahmebereich (26a) anordenbare Energiezelle (22a) in einem in dem Energiezellenaufnahmebereich (26a) angeordneten Zustand der Energiezelle (22a) durch eine Anordnung des weiteren Klemmelements (28a) relativ zu dem Energiezellenaufnahmebereich (26a) einstellbar ist.

4. Energiezellenhaltevorrichtung (14a) nach einem der vorhergehenden Ansprüche, **dadurch gekennzeichnet, dass** das weitere Klemmelement (28a) zu einem zusätzlichen Verklemmen der in dem Energiezellenaufnahmebereich (26a) anordenbaren Energiezelle (22a) in einem in dem Energiezellenaufnahmebereich (26a) angeordneten Zustand der Energiezelle (22a) in die Zellenhaltereinheit (16a) einschiebbar ist.

5. Energiezellenhaltevorrichtung (14a) nach einem der vorhergehenden Ansprüche, **dadurch gekennzeichnet, dass** das weitere Klemmelement (28a) zu einem zusätzlichen Verklemmen der in dem Energiezellenaufnahmebereich (26a) anordenbaren Energiezelle (22a) in einem in dem Energiezellenaufnahmebereich (26a) angeordneten Zustand der Energiezelle (22a) in die Zellenhaltereinheit (16a) einschiebbar ist, wobei über eine Einschubtiefe des weiteren Klemmelements (28a) relativ zu der Zellenhaltereinheit (16a) eine auf die Energiezelle (22a) wirkende Klemmkraft einstellbar ist.

6. Energiezellenhaltevorrichtung (14a) nach einem der vorhergehenden Ansprüche, **dadurch gekennzeichnet, dass** das weitere Klemmelement (28a) zu einem zusätzlichen Verklemmen der in dem Energiezellenaufnahmebereich (26a) anordenbaren Energiezelle (22a) in einem in dem Energiezellenaufnahmebereich (26a) angeordneten Zustand der Energiezelle (22a) in die Zellenhaltereinheit (16a) einschiebbar ist, wobei das weitere Klemmelement (28a) rotationssymmetrisch ausgebildet ist.

7. Energiezellenhaltevorrichtung (14a) nach einem der vorhergehenden Ansprüche, **dadurch gekennzeichnet, dass** das weitere Klemmelement (28a) zu einem zusätzlichen Verklemmen der in dem Energiezellenaufnahmebereich (26a) anordenbaren Energiezelle (22a) in einem in dem Energiezellenaufnahmebereich (26a) angeordneten Zustand der Energiezelle (22a) in die Zellenhaltereinheit (16a) einschiebbar ist, wobei das weitere Klemmelement (28a) keilartig ausgebildet ist.

8. Energiezellenhaltevorrichtung (14a) nach einem der vorhergehenden Ansprüche, **dadurch gekennzeichnet, dass** die Klemmeinheit (20a) zumindest eine, insbesondere von dem Energiezellenaufnahmebereich (26a) für die Energiezelle (22a) verschiedene, Klemmelementaufnahme (30a) aufweist, die dazu vorgesehen ist, zumindest das weitere Klemmelement (28a) der Klemmeinheit (20a) aufzunehmen, um die in dem Energiezellenaufnahmebereich (26a) anordenbare Energiezelle (22a) in einem in dem Energiezellenaufnahmebereich (26a) angeordneten Zustand der Energiezelle (22a) im Zellenhalterelement (24a) zu verklemmen, wobei die Klemmelementaufnahme (30a) sich verjüngend ausgebildet ist.

9. Energiezellenhaltevorrichtung (14a) nach einem der vorhergehenden Ansprüche, **dadurch gekennzeichnet, dass** die Klemmeinheit (20a) zumindest eine, insbesondere von dem Energiezellenaufnahmebereich (26a) für die Energiezelle (22a) verschiedene, Klemmelementaufnahme (30a) aufweist, die dazu vorgesehen ist, zumindest das weitere Klemmelement (28a) der Klemmeinheit aufzunehmen, um die in dem Energiezellenaufnahmebereich (26a) anordenbare Energiezelle (22a) in einem in dem Energiezellenaufnahmebereich (26a) angeordneten Zustand der Energiezelle (22a) im Zellenhalterelement (24a) zu verklemmen, wobei die Klemmelementaufnahme (30a) beabstandet zu dem Energiezellenaufnahmebereich (26a) angeordnet ist oder, insbesondere direkt, an dem Energiezellenaufnahmebereich (26a) anliegt.

10. Energiezellenhaltevorrichtung (14c) nach einem der vorhergehenden Ansprüche, **gekennzeichnet, durch** ein Gehäuse (32c), in dem zumindest die Zellenhaltereinheit (16c) anordenbar ist, wobei das Klemmelement (18c) in dem Energiezellenaufnahmebereich (26c) angeordnet ist und das weitere Klemmelement (28c) an einer Seitenfläche (34c) der Zellenhaltereinheit (16c) anordenbar ist und dazu vorgesehen ist, durch ein Verschließen des Gehäuses (32c) die in dem Energiezellenaufnahmebereich (26c) anordenbare Energiezelle (22c) in einem in dem Energiezellenaufnahmebereich (26c) angeordneten Zustand der Energiezelle (22c) mit dem Zellenhalterelement (24c) zu verklemmen.

11. Energiezellenhaltevorrichtung (14c) nach einem der vorhergehenden Ansprüche, **dadurch gekennzeichnet, dass** die Zellenhaltereinheit (16c) derart ausgebildet ist, dass der Energiezellenaufnahmebereich (26c) über eine Wärmezufuhr vergrößerbar ist.

12. Akkupack (12a) mit zumindest einer Energiezelle (22a), mit einem Akkupackgehäuse (38a), wobei das Akkupackgehäuse (38a) eine mechanische und/oder elektrische Schnittstelle (36a) zur lösbaren Verbindung mit einer Verbrauchereinheit aufweist, und mit zumindest einer Energiezellenhaltevorrichtung (14a) nach einem der vorhergehenden Ansprüche.

13. Akkupack (12d) nach Anspruch 12, **dadurch gekennzeichnet, dass** die Energiezelle (22d) im Energiezellenaufnahmebereich (26d) in einem Querschnitt betrachtet über drei Klemmpunkte (42d, 44d, 46d) verklemmt ist, wobei zumindest ein Klemmpunkt (46d) der drei Klemmpunkte (42d, 44d, 46d) verschieden von dem zumindest einen Klemmelement (18d) ausgebildet ist.

14. Akkupack (12d) nach einem der Ansprüche 12 oder 13, **dadurch gekennzeichnet, dass** das weitere Klemmelement (28d) durch das Akkupackgehäuse 38d, insbesondere durch ein außenliegendes Gehäuseteil, insbesondere einen Akkupackgehäuseboden (48d), des Akkupackgehäuses (38d), gebildet ist.

15. System (10a), umfassend einen Akkupack (12a) mit einer Energiezellenhaltevorrichtung (14a) nach Anspruch 1 und einem weiteren Akkupack (12a') mit einer Energiezellenhaltevorrichtung (14a') nach dem Oberbegriff des Anspruchs 1, **dadurch gekennzeichnet, dass** die Zellenhaltereinheit (16a) der Energiezellenhaltevorrichtung (14a) des Akkupacks (12a) und die Zellenhaltereinheit (16a') der Energiezellenhaltevorrichtung (14a') des weiteren Akkupacks (12a') sowie das Klemmelement (18a) der Klemmeinheit (20a) des Akkupacks (12a) und das Klemmelement (18a') der Klemmeinheit (20a') des weiteren Akkupacks (12a') zumindest im Wesentlichen identisch ausgebildet sind.
